(19) Europäisches Patentamt
European Patent Office
Office européen des brevets

(11) **EP 4 195 822 A1**

(12) **EUROPEAN PATENT APPLICATION**
published in accordance with Art. 153(4) EPC

(43) Date of publication:
**14.06.2023 Bulletin 2023/24**

(21) Application number: **21852496.5**

(22) Date of filing: **27.07.2021**

(51) International Patent Classification (IPC):
**H04W 72/04** (2023.01)    **H04W 72/12** (2023.01)
**H04W 28/04** (2009.01)

(52) Cooperative Patent Classification (CPC):
**H04L 1/1896; H04L 1/1822; H04L 1/1854;**
**H04W 28/04; H04W 72/04; H04W 72/12**

(86) International application number:
**PCT/JP2021/027656**

(87) International publication number:
**WO 2022/030295 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020 JP 2020134193**

(71) Applicant: **Sony Group Corporation**
**Minato-Ku, Tokyo, 108-0075 (JP)**

(72) Inventors:
• **KUSASHIMA, Naoki**
  **Tokyo 108-0075 (JP)**
• **MATSUDA, Hiroki**
  **Tokyo 108-0075 (JP)**

(74) Representative: **Witte, Weller & Partner**
**Patentanwälte mbB**
**Postfach 10 54 62**
**70047 Stuttgart (DE)**

(54) **COMMUNICATION METHOD**

(57)    A communication method according to an aspect of the present disclosure includes the steps of: transmitting one piece of downlink control information for scheduling a plurality of PDSCHs having different HARQ process identification information to a terminal device (40); and receiving, from the terminal device (40), a plurality of HARQ-ACKs corresponding to the plurality of PDSCHs scheduled by the downlink control information, the plurality of HARQ-ACKs fed back at the same feedback timing or a plurality of different feedback timings, in which the feedback timings are selected in accordance with a predetermined condition.

FIG.2

EP 4 195 822 A1

## Description

Field

The present disclosure relates to a communication method.

Background

Mobile communication using radio access technology such as cellular communication technology is known. In this radio access technology, utilization of high-frequency bands called millimeter waves from 52.6 GHz to 100 GHz is studied in various use cases due to a demand for a wider band. Non Patent Literature 1 discloses a study on utilization of millimeter waves in 3GPP.

Citation List

Non Patent Literature

Non Patent Literature 1: R1-2003811, "Required changes to NR using existing DL/UL NR waveform", Nokia, Nokia Shanghai Bell, 3GPP RAN1#101, May 2020.

Summary

Technical Problem

However, in the conventional radio access technology, it is difficult to suppress reduction of a coverage while suppressing the power consumption of a terminal device only by applying the technology according to Cited Literature 1 for the use of high frequency bands.
Therefore, the present disclosure proposes a communication method capable of reducing the power consumption of a terminal device and suppressing coverage reduction.
Note that the above problem or object is merely one of a plurality of problems or objects that can be solved or achieved by a plurality of embodiments disclosed herein.

Solution to Problem

According to the present, a communication method including the steps of: transmitting one piece of downlink control information for scheduling a plurality of PDSCHs having different HARQ process identification information to a terminal device; and receiving, from the terminal device, a plurality of HARQ-ACKs corresponding to the plurality of PDSCHs scheduled by the downlink control information, the plurality of HARQ-ACKs fed back at a same feedback timing or a plurality of different feedback timings, wherein the feedback timings are selected in accordance with a predetermined condition, is provided.
According to the present, a communication method including the steps of: receiving, from a base station device, one piece of downlink control information for scheduling a plurality of PDSCHs having different HARQ process identification information; and feeding back a plurality of HARQ-ACKs corresponding to the plurality of PDSCHs scheduled by the downlink control information to the base station device at a same feedback timing or a plurality of different feedback timings, wherein the feedback timings are selected in accordance with a predetermined condition, is provided.
According to the present, a communication method including the steps of: transmitting, to a terminal device, a plurality of pieces of downlink control information for scheduling a plurality of PDSCHs having different HARQ process identification information, the plurality of pieces of downlink control information allocated in one CORESET in one slot; and receiving, from the terminal device, a plurality of HARQ-ACKs corresponding to the plurality of PDSCHs scheduled by the plurality of pieces of downlink control information, is provided.
According to the present, a communication method including the steps of: receiving, from a base station device, a plurality of pieces of downlink control information for scheduling a plurality of PDSCHs having different HARQ process identification information, the plurality of pieces of downlink control information allocated in one CORESET in one slot; and feeding back, to the base station device, a plurality of HARQ-ACKs corresponding to the plurality of PDSCHs scheduled by the plurality of pieces of downlink control information, is provided.

Brief Description of Drawings

FIG. 1 is a diagram for explaining that the frequency of PDCCH monitoring increases due to an increase in SCS according to an embodiment of the present disclosure.

FIG. 2 is a diagram illustrating a configuration example of a communication system according to the embodiment of the disclosure.

FIG. 3 is a diagram illustrating a configuration example of a management device according to the embodiment of the disclosure.

FIG. 4 is a diagram illustrating a configuration example of a base station device according to the embodiment of the disclosure.

FIG. 5 is a diagram illustrating a configuration example of a relay device according to the embodiment of the disclosure.

FIG. 6 is a diagram illustrating a configuration example of a terminal device according to the embodiment of the disclosure.

FIG. 7 is a diagram illustrating a frame structure NR according to the embodiment of the disclosure.

FIG. 8 is a table illustrating "Supported transmission numerologies (3GPP TS 38.211, Table 4.2-1)" according to the embodiment of the disclosure.

FIG. 9 is a table illustrating "Number of OFDM symbols per slot, slots per frame, and slots per subframe for normal cyclic prefix (3GPP TS 38.211 Table 4.3.2-1)" according to the embodiment of the disclosure.

FIG. 10 is a diagram illustrating a first allocation example of DMRS of PDCCH according to the embodiment of the disclosure.

FIG. 11 is a table illustrating "Maximum number of monitored PDCCH candidates per slot for a DL BWP with SCS configuration for a single serving cell (3GPP TS 38.213 Table 10.1-2)" according to the embodiment of the disclosure.

FIG. 12 is a table illustrating "Maximum number of non-overlapped CCEs per slot for a DL BWP with SCS configuration for a single serving cell (3GPP TS 38.213 Table 10.1-3)" according to the embodiment of the disclosure.

FIG. 13 is a diagram for describing a schedule example of a plurality of PDSCHs by one piece of DCI according to the embodiment of the disclosure.

FIG. 14 is a diagram for describing an example of specifying the same HARQ-ACK feedback timing in a plurality of PDSCHs according to the embodiment of the disclosure.

FIG. 15 is a diagram for describing an example of processing depending on whether or not to return HARQ-ACK in a plurality of PDSCHs according to the embodiment of the disclosure.

FIG. 16 is a diagram for describing an example of specifying different HARQ-ACK feedback timing in a plurality of PDSCHs according to the embodiment of the disclosure.

FIG. 17 is a diagram for describing a schedule example of a plurality of PDSCHs by a plurality pieces of DCI in one slot according to the embodiment of the disclosure.

FIG. 18 is a diagram for describing an allocation example of a plurality pieces of DCI for one CORESET according to the embodiment of the disclosure.

FIG. 19 is a diagram for describing an allocation example of a plurality of CORESETs (DCI) for one slot according to the embodiment of the disclosure.

FIG. 20 is a diagram illustrating a second allocation example of DMRS of PDCCH according to the embodiment of the disclosure.

Description of Embodiments

Hereinafter, embodiments of the present disclosure will be described in detail on the basis of the drawings. The drawings are merely illustration of examples. Note that in each of the following embodiments, the same parts are denoted by the same symbols, and redundant description will be omitted.

Note that, in the present specification and the drawings, components having substantially the same functional configuration may be distinguished by attaching different alphabets after the same symbol. For example, a plurality of components having substantially the same functional configuration are distinguished as in base station devices $20_1$, $20_2$, and 20s as necessary. However, in a case where it is not particularly necessary to distinguish each of a plurality of components having substantially the same functional configuration, only the same symbol is attached. For example, in a case where it is not necessary to particularly distinguish between the base station devices $20_1$, $20_2$, and $20_3$, they are simply referred to as base station devices 20.

One or a plurality of embodiments (including examples and modifications) described below can be each implemented independently. Meanwhile, at least a part of the plurality of embodiments described below may be combined with at least a part of another embodiment as desired and be thereby implemented. The plurality of embodiments may include novel features different from each other. Therefore, the plurality of embodiments can contribute to solving different objects or problems and achieve different effects.

The description will be given in the following order.

1. Introduction
2. Configuration of Communication System

    2-1. Overall Configuration of Communication System
    2-2. Configuration of Management Device
    2-3. Configuration of Base Station Device
    2-4. Configuration of Relay Device
    2-5. Configuration of Terminal Device
    2-6. Radio Frame Structure

3. Examples

    3-1. First Example (multi-slot PDSCH scheduling by one DCI)
    3-1-1. HARQ-ACK Feedback Timing (e.g. Examples 1 to 3)
    3-1-2. Method for Notifying Slot in Which PDSCH is Scheduled
    3-1-3. Method for Notifying HARQ Process ID
    3-1-4. NDI Notification Method
    3-1-5. RV Notification Method
    3-1-6. MCS Notification Method
    3-1-7. Switching between Multi-Slot PDSCH Scheduling and Single-Slot PDSCH Scheduling
    3-1-8. DAI
    3-1-9. PUCCH Resource
    3-1-10. Frequency Axis Resource Allocation 3-1-11. Priority Indicator
    3-1-12. Summary of First Example
    3-2. Second Example (multi-slot PDSCH scheduling by multiple pieces of DCI)
    3-2-1. Method for Extending One CORESET (Example 1)
    3-2-2. Method for Allocating Plurality of CORESETs in One Slot (Example 2)
    3-2-3. Cross-Slot Scheduling
    3-2-4. Summary of Second Example
    3-3. Third Example: multi-cell scheduling by one piece of DCI
    3-3-1. Carrier Indicator
    3-3-2. T-DAI

4. Others

<1. Introduction>

Radio access technology (RAT) such as long term evolution (LTE) and new radio (NR) are studied in the 3rd Generation Partnership Project (3GPP). LTE and NR are types of cellular communication technology, which enable mobile communication of a terminal device by arranging a plurality of areas covered by a base station in the shape of cells. Note that, in the following description, "LTE" includes LTE-Advanced (LTE-A), LTE-Advanced Pro (LTE-A Pro), and Evolved Universal Terrestrial Radio Access (EUTRA). In addition, NR includes new radio access technology (NRAT) and further EUTRA (FEUTRA). In LTE, a base station device (base station) is also referred to as an evolved NodeB (eNodeB), whereas in NR, a base station device (base station) is also referred to as a gNodeB, and a terminal device (mobile station, mobile station device, or terminal) is also referred to as user equipment (UE) and in LTE and NR. LTE and NR are cellular communication systems in which a plurality of areas covered by a base station device is arranged in the shape of cells. Note that a single base station may manage a plurality of cells. In the following description, a cell supporting LTE is referred to as an LTE cell, and a cell supporting NR is referred to as an NR cell.

NR, being a next generation (5th generation) radio access scheme to LTE, is RAT different from LTE. NR is radio access technology capable of supporting various use cases including Enhanced Mobile Broadband (eMBB), Massive Machine Type Communications (mMTC), and Ultra-Reliable and Low Latency Communications (URLLC). NR is studied aiming at a technical framework supporting usage scenarios, requirements, arrangement scenarios, and the like in those use cases.

At present, utilization of high frequency bands referred to as millimeter waves from 52.6 GHz to 100 GHz is studied due to a demand for a wider band. In a frequency band of 52.6 GHz to 100 GHz, utilization in various use cases such as high data rate eMBB, mobile data offloading, and vertical industry factory application is studied. Non Patent Literature 1 discloses a study on utilization of millimeter waves in 3GPP.

That is, due to depletion of frequency resources of microwaves, as described above, operation using millimeter waves in which it is easier to secure the frequency band is studied. In particular, utilization of 52.6 GHz or higher is expected. For example, in NR, a frequency range higher than or equal to 52.6 GHz is defined as a fourth frequency range Frequency Range 4 (FR4).

Note that, in addition to the above-mentioned high data rate eMBB, mobile data offloading, vertical industry factory application, and the like, examples of use cases of communication using millimeter waves include short-range high data rate D2D communications, a broadband distribution network, integrated access backhaul (IAB), factory automation and industrial IoT (IIoT), augmented reality or virtual reality headsets and other high-end wearables, Intelligent Transport System (ITS) and V2X, data center inter-rack connectivity, smart grid automation, radar and positioning, private networks, and the like.

In millimeter waves, high SCS higher than or equal to 240 kHz, which is highly resistant to a frequency offset and phase noise, is applied. A frequency offset occurs due to a mismatch of oscillators between a transmitter and a receiver, a Doppler shift, a timing synchronization error, etc. These factors appear more prominently in millimeter waves. The phase noise has a greater influence in the high frequency band. For example, 960 kHz SCS is supported in millimeter waves.

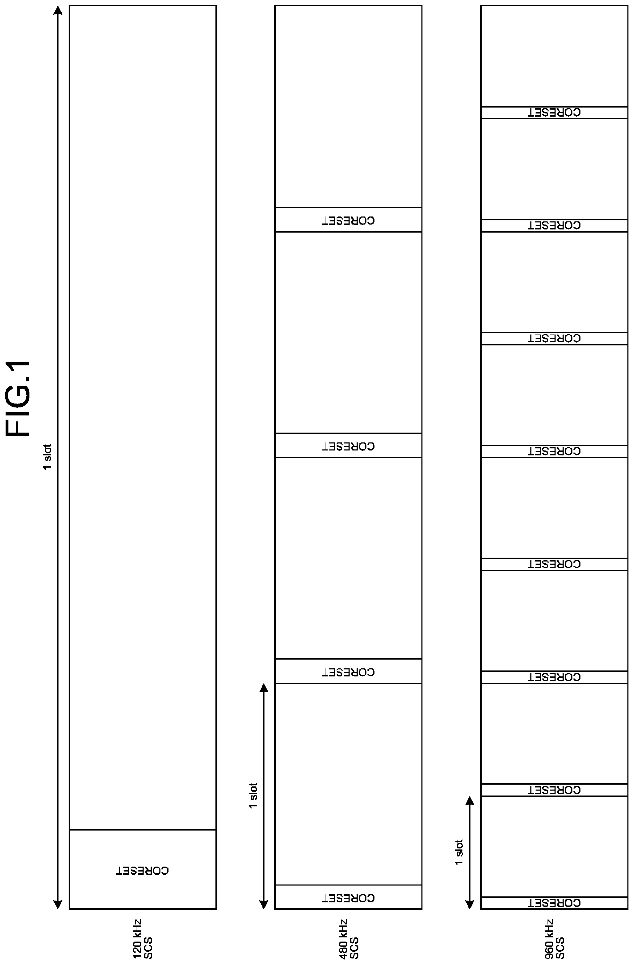

In a case where the SCS (numerology, OFDM numerology) is high, the frequency of Physical Downlink Control Channel (PDCCH) monitoring increases, which affects the power consumption of a terminal device. Normally, PDCCH is arranged in every slot in order to perform fine control on the time axis, that is, it is designed so that PDCCH monitoring is performed for every slot. Therefore, as illustrated in FIG. 1, in cases where the SCS is higher (120 kHz -> 480 kHz -> 960 kHz), the time per slot becomes shorter, and thus PDCCH monitoring is frequently performed. On the other hand, in a case where the number of times of PDCCH monitoring or the number of control channel elements (CCEs) per slot is reduced, the power consumption of a terminal device can be suppressed, however, the schedule of PDCCH is affected. In particular, in a case where the number of CCEs per slot is limited to less than or equal to sixteen, PDCCH transmission using CCE aggregation level 16 is impossible, which may affect the PDCCH coverage (e.g. communication area) and reduce the coverage.

However, it is difficult to prevent the limitation of the number of times of PDCCH monitoring or the number of CCEs per slot from affecting the schedule of PDCCH while suppressing the power consumption of the terminal device only by using the technology as in Cited Literature 1. Therefore, in the present embodiment, in a communication system using radio access technology such as LTE or NR, flexible design is made depending on various use cases, that is, a slot for which PDCCH is not monitored is set, the PDCCH monitoring is performed not for every slot but collectively to some extent, and a Physical Downlink Shared Channel (PDSCH) is scheduled from one slot, for which the PDCCH monitoring is performed, to a plurality of slots for which the PDCCH is not monitored, thereby making it possible to reduce the power consumption and suppress of the coverage reduction in a terminal device 40 (details will be described later). Note that the frequency band is not limited to millimeter waves.

<2. Configuration of Communication System>

Hereinafter, a communication system according to an embodiment of the present disclosure will be described. The communication system includes a base station and is wirelessly connectable to a terminal device. A terminal device of the present embodiment can transmit user data to a base station device without performing a random access procedure. Note that the communication system may be capable of wireless communication with the terminal device using non-orthogonal multiple access (NOMA). NOMA communication is communication using non-orthogonal resources (transmission, reception, or both). A non-terrestrial network included in the communication system is, for example, a wireless network using a radio access scheme defined by NR. It is naturally understood that the communication system may include a wireless network of a wireless access scheme other than NR.

Note that, in the following description, the concept of the base station device (hereinafter also referred to as a base station) includes the relay device (hereinafter also referred to as a relay station) which is a type of the base station device. Furthermore, the concept of the base station device includes not only structures having a function as the base station device but also a device installed in the structure. The structure is, for example, a building such as a high-rise building, a house, a steel tower, a station facility, an airport facility, a harbor facility, or a stadium. Note that the concept of the structure includes not only buildings but also non-building structures such as a tunnel, a bridge, a dam, a wall, or a steel pillar and facilities such as a crane, a gate, or a windmill. In addition, the concept of the structure includes not only structures on the ground (land) or underground but also structures over the water such as a pier or a megafloat and structures in water such as a marine observation facility.

Furthermore, the base station device may be configured to be mobile. For example, the base station device may be installed in a traveling body or may be a traveling body itself. The traveling body may be a mobile terminal such as a smartphone. In addition, the traveling body may be a traveling body that travels on the ground (land) (for example, a vehicle such as an automobile, a bus, a truck, a train, or a maglev train) or a traveling body (e.g. the subway) that travels underground (for example, in a tunnel). In addition, the traveling body may be a traveling body that travels over the water (for example, a ship such as a passenger ship, a cargo ship, or a hovercraft) or a traveling body that travels underwater (for example, submersible vehicles such as a submersible vessel, a submersible, or an unmanned submersible). Furthermore, the traveling body may be a traveling body that travels within the Earth's atmosphere (for example, an aircraft such as an airplane, an airship, or a drone) or a traveling body that travels outside the Earth's atmosphere (for example, artificial celestial bodies such as an artificial satellite, a spacecraft, a space station, or a space probe).

Note that an LTE base station may be referred to as an evolved node B (eNodeB) or an eNB. Meanwhile, an NR base station may be referred to as a gNodeB or a gNB. In LTE and NR, a terminal device (also referred to as a mobile station, a mobile station device, or a terminal) may be referred to as user equipment (UE). Note that the terminal device is a type of communication device and is also referred to as a mobile station, a mobile station device, or a terminal. In the embodiment of the present disclosure, the concept of the communication device includes not only portable terminal devices such as a mobile terminal but also devices installed in a structure or a traveling body, for example. In addition, the concept of the communication device includes not only the terminal device but also the base station device and the relay device.

<2-1. Overall Configuration of Communication System>

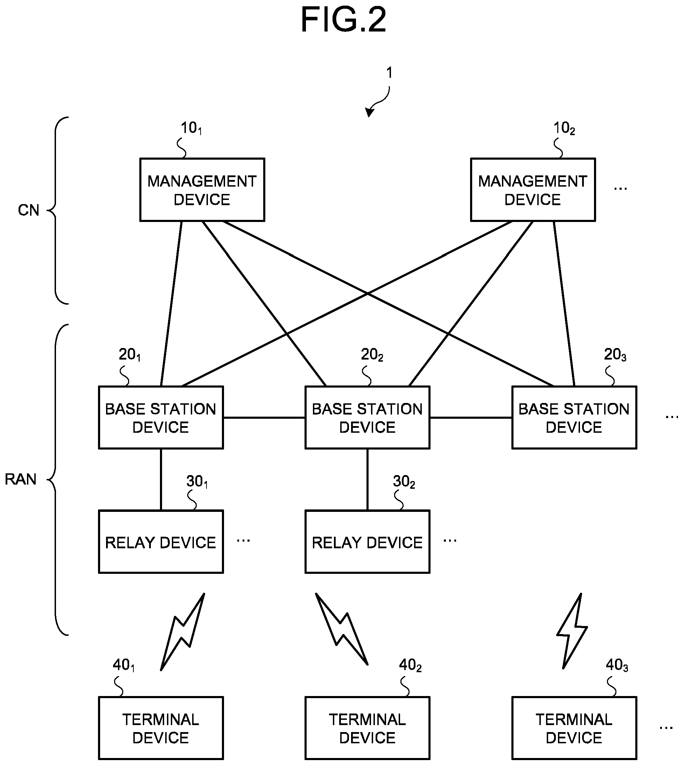

FIG. 2 is a diagram illustrating a configuration example of a communication system 1 according to the embodiment of the disclosure. As illustrated in FIG. 2, the communication system 1 includes management devices 10, base station devices 20, relay devices 30, and terminal devices 40. The communication system 1 provides the user with a wireless network capable of mobile communication with wireless communication devices included in the communication system 1 operating in cooperation. The wireless communication devices refer to devices having a function of wireless communication and correspond to the base station devices 20, the relay devices 30, and the terminal devices 40 in the example of FIG. 2.

The communication system 1 may include a plurality of management devices 10, a plurality of base station devices 20, a plurality of relay devices 30, and a plurality of terminal devices 40. In the example of FIG. 2, the communication system 1 includes management devices $10_1$ and $10_2$ as the management devices 10. The communication system 1 also includes base station devices $20_1$, $20_2$, $20_3$, and more as the base station devices 20 and includes relay devices $30_1$, $30_2$, and more as the relay devices 30. Furthermore, the communication system 1 includes terminal devices $40_1$, $40_2$, $40_3$, and more as the terminal devices 40.

A management device 10 manages the wireless network. For example, a management device 10 functions as a mobility management entity (MME) or an access and mobility management function (AMF). The management devices 10 are included in a core network CN. The core network CN is, for example, an Evolved Packet Core (EPC) or a 5G Core network (5GC). A management device 10 is connected to each of the plurality of base station devices 20. A management device 10 manages communication of the base station devices 20.

A base station device 20 is a base station device that wirelessly communicates with a terminal device 40. A base station device 20 can perform NOMA communication with a terminal device 40. Note that a base station device 20 may be configured to be able to perform NOMA communication with another base station device 20 and a relay device 30.

A base station device 20 may be a ground base station device (ground station device) installed on the ground. For example, a base station device 20 may be a base station device installed in a structure on the ground or may be a base station device installed in a traveling body traveling on the ground. More specifically, the base station device 20 may be an antenna installed in a structure such as a building and a signal processing device connected to the antenna. It is naturally understood that a base station device 20 may be a structure or a traveling body itself. The "ground" refers to the ground in a broad sense including not only the ground (land) but also underground, over the water, and underwater. Note that a base station device 20 is not limited to a ground base station device. A base station device 20 may be a non-ground base station device (non-ground station device) capable of floating in the air or in the space. For example, a base station device 20 may be an aircraft station device or a satellite station device.

An aircraft station device is a wireless communication device capable of floating in the Earth's atmosphere, such as an aircraft. An aircraft station device may be a device mounted on an aircraft or the like or may be an aircraft itself. Note that the concept of the aircraft includes not only heavy aircrafts such as an airplane and a glider but also light aircrafts such as a balloon and an airship. In addition, the concept of the aircraft includes not only heavy aircrafts and light aircrafts but also rotorcrafts such as helicopters and autogyros. Note that the aircraft station device (or an aircraft on which the aircraft station device is mounted) may be an unmanned aircraft such as a drone. Note that the concept of the unmanned aircraft also includes unmanned aircraft systems (UASs) and tethered UASs. The concept of the unmanned aircrafts also includes Lighter-than-Air UASs (LTAs) and Heavier-than-Air UASs (HTAs). Other than the above, the concepts of the unmanned aircrafts also include High Altitude UAS Platforms (HAPs).

A satellite station device is a wireless communication device capable of floating outside the Earth's atmosphere. A satellite station device may be a device mounted on a space vehicle such as an artificial satellite or may be a space vehicle itself. A satellite serving as a satellite station device may be any of a low earth orbiting (LEO) satellite, a medium earth orbiting (MEO) satellite, a geostationary earth orbiting (GEO) satellite, or a highly elliptical orbiting (HEO) satellite. It is naturally understood that a satellite station device may be a device mounted on a low earth orbiting satellite, a medium earth orbiting satellite, a geostationary earth orbiting satellite, or a high elliptical orbiting satellite.

Note that, in the example of FIG. 2, the base station device $20_1$ is connected with the relay device $30_1$, and the base station device $20_2$ is connected with the relay device 30z. The base station device $20_1$ can indirectly perform wireless communication with a terminal device 40 via the relay device $30_1$. Similarly, the base station device $20_2$ can indirectly perform wireless communication with a terminal device 40 via the relay device 30z.

A relay device 30 is a device serving as a relay station of a base station. A relay device 30 is a type of base station devices. A relay device 30 can perform NOMA communication with a terminal device 40. A relay device 30 relays communication between a base station device 20 and a terminal device 40. Note that a relay device 30 may be configured so as to be able to perform NOMA communication with another relay device 30 and a base station device 20. A relay device 30 may be a ground station device or a non-ground station device. The relay devices 30 are included in a radio access network RAN together with the base station devices 20.

A terminal device 40 is, for example, a mobile phone, a smart device (smartphone or tablet), a personal digital assistant (PDA), or a personal computer. Alternatively, a terminal device 40 may be a machine to machine (M2M) device or an Internet of things (IoT) device. Furthermore, a terminal device 40 may be a wireless communication device installed in a traveling body or may be a traveling body itself. A terminal device 40 can perform NOMA communication with a base station device 20 and a relay device 30. Note that a terminal device 40 may also be capable of performing NOMA communication in communication (sidelink) with another terminal device 40.

Hereinafter, the configuration of each of the devices included in the communication system 1 according to the embodiment will be specifically described.


<2-2. Configuration of Management Device>

A management device 10 manages the wireless network. For example, a management device 10 manages communication of the base station devices 20. In a case where the core network is EPC, a management device 10, for example, has a function as a Mobility Management Entity (MME). Alternatively, in a case where the core network is 5GC, a management device 10, for example, has a function as the Access and Mobility Management Function (AMF).

Note that a management device 10 may have a function as a gateway. For example, in a case where the core network is EPC, a management device 10 may have a function as a Serving Gateway (S-GW) or a Packet Data Network Gateway (P-GW). Alternatively, in a case where the core network is 5GC, a management device 10 may have a function as the User Plane Function (UPF). Note that a management device 10 is not necessarily a device included in the core network. For example, let us presume that the core network is Wideband Code Division Multiple Access (W-CDMA) or Code Division Multiple Access 2000 (cdma2000). In this case, the management device 10 may function as a Radio Network Controller (RNC).

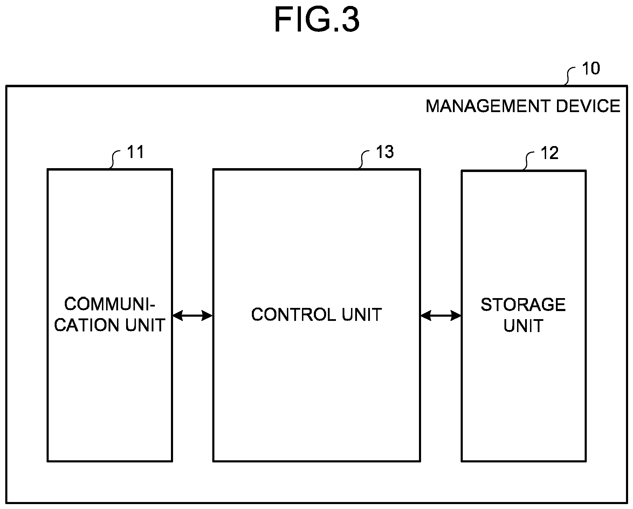

FIG. 3 is a diagram illustrating a configuration example of a management device 10 according to the embodiment of the disclosure. As illustrated in FIG. 3, the management device 10 includes a communication unit 11, a storage unit 12, and a control unit 13. Note that the configuration illustrated in FIG. 3 is a functional configuration, and the hardware configuration may be different from this. Furthermore, the functions of the management device 10 may be implemented in a distributed manner in a plurality of physically separated configurations. For example, the management device 10 may include a plurality of server devices.

The communication unit 11 is a communication interface for communicating with other devices. The communication unit 11 may be a network interface or a device connection interface. For example, the communication unit 11 may be a Local Area Network (LAN) interface such as a Network Interface Card (NIC) or may be a USB interface including a Universal Serial Bus (USB) host controller, a USB port, and the like. The communication unit 11 may be a wired interface or a wireless interface. The communication unit 11 functions as a communication means of the management device 10. The communication unit 11 communicates with a base station device 20 under the control by the control unit 13.

The storage unit 12 is a data readable and writable storage device such as a dynamic random access memory (DRAM), a static random access memory (SRAM), a flash memory, or a hard disk. The storage unit 12 functions as a storage means of the management device 10. The storage unit 12 stores, for example, the connection state of a terminal device 40. For example, the storage unit 12 stores the state of Radio Resource Control (RRC) and the state of EPS Connection Management (ECM) of a terminal device 40. The storage unit 12 may function as a home memory that stores the position information of a terminal device 40.

The control unit 13 is a controller that controls each of the units of the management device 10. The control unit 13 is implemented by, for example, a processor such as a central processing unit (CPU) or a micro processing unit (MPU). For example, the control unit 13 is implemented by a processor executing various programs stored in a storage device inside the management device 10 using a random access memory (RAM) or the like as a work area. Note that the control unit 13 may be implemented by an integrated circuit such as an application specific integrated circuit (ASIC) or a field programmable gate array (FPGA). Any of a CPU, an MPU, an ASIC, and an FPGA can be deemed as a controller.

<2-3. Configuration of Base Station Device>

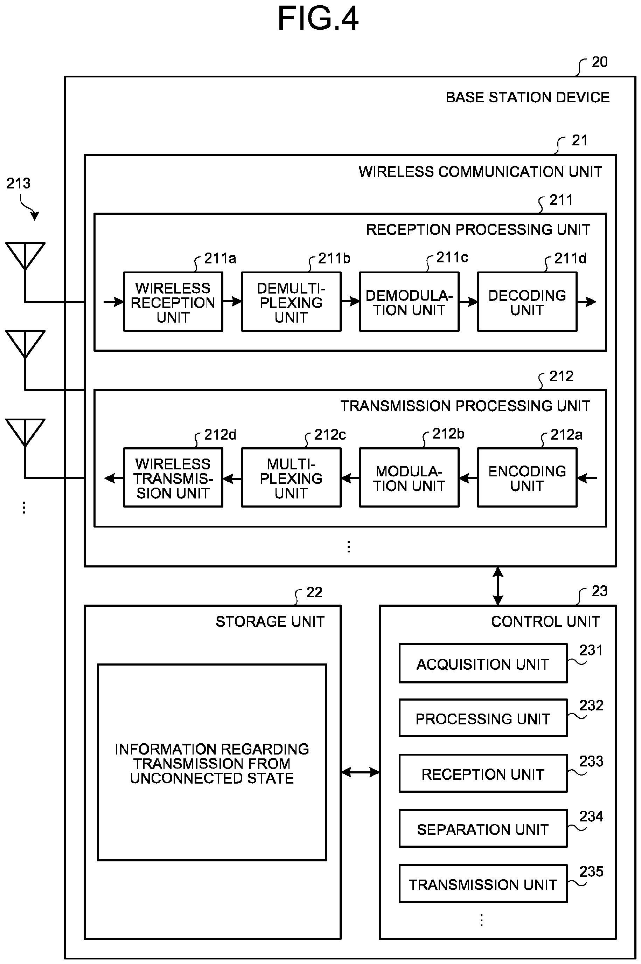

Next, the configuration of the base station devices will be described. FIG. 4 is a diagram illustrating a configuration example of a base station device 20 according to the embodiment of the disclosure. The base station device 20 can perform NOMA communication with a terminal device 40. The base station device 20 includes a wireless communication unit 21, a storage unit 22, and a control unit 23. Note that the configuration illustrated in FIG. 4 is a functional configuration, and the hardware configuration may be different from the functional configuration. Furthermore, the functions of the base station device 20 may be implemented in a distributed manner in a plurality of physically separated configurations.

The wireless communication unit 21 is a wireless communication interface that wirelessly communicates with other wireless communication devices (for example, a terminal device 40 and a relay device 30). The wireless communication unit 21 operates under the control by the control unit 23. The wireless communication unit 21 supports one or a plurality of wireless access schemes. For example, the wireless communication unit 21 supports both NR and LTE. The wireless communication unit 21 may support W-CDMA or cdma2000 in addition to NR or LTE. In addition, the wireless communication unit 21 supports communication using NOMA.

The wireless communication unit 21 includes a reception processing unit 211, a transmission processing unit 212, and antennas 213. The wireless communication unit 21 may include a plurality of reception processing units 211, a plurality of transmission processing units 212, and a plurality of antennas 213. Note that, in a case where the wireless communication unit 21 supports a plurality of wireless access schemes, the units of the wireless communication unit 21 can be individually configured for each of the wireless access schemes. For example, the reception processing unit 211 and the transmission processing unit 212 may be individually configured for LTE and NR.

The reception processing unit 211 processes an uplink signal received via an antenna 213. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, control of the amplification level, quadrature demodulation, conversion to a digital signal, removal of a guard interval, extraction of a frequency domain signal by fast Fourier transform, and others. The demultiplexing unit 211b demultiplexes an uplink channel such as a physical uplink shared channel (PUSCH) or a physical uplink control channel (PUCCH) and an uplink reference signal from the signal output from the wireless reception unit 211a. The demodulation unit 211c demodulates the reception signal using a modulation scheme such as binary phase shift keying (BPSK) or quadrature phase shift keying (QPSK) on a modulation symbol of the uplink channel. The modulation scheme used by the demodulation unit 211c may be 16 quadrature amplitude modulation (QAM), 64QAM, or 256QAM. The decoding unit 211d performs decoding processing on the demodulated encoded bits of the uplink channel. The decoded uplink data and uplink control information are output to the control unit 23.

The transmission processing unit 212 performs transmission processing unit of downlink control information and downlink data. The transmission processing unit 212 includes an encoding unit 212a, a modulation unit 212b, a multiplexing unit 212c, and a wireless transmission unit 212d.

The encoding unit 212a encodes the downlink control information and the downlink data input from the control unit 23 using an encoding scheme such as block encoding, convolutional encoding, or turbo encoding. The modulation unit 212b modulates the coded bits output from the encoding unit 212a by a predetermined modulation scheme such as BPSK, QPSK, 16QAM, 64QAM, or 256QAM. The multiplexing unit 212c multiplexes a modulation symbol and a downlink reference signal of each channel and allocates the multiplexed symbol in a predetermined resource element. The wireless transmission unit 212d performs various types of signal processing on the signal from the multiplexing unit 212c. For example, the wireless transmission unit 212d performs processing such as conversion into the time domain by fast Fourier transform, addition of a guard interval, generation of a baseband digital signal, conversion into an analog signal, quadrature modulation, up-conversion, removal of an excessive frequency component, or power amplification. The signal generated by the transmission processing unit 212 is transmitted from an antenna 213.

The storage unit 22 is a storage device capable of reading and writing data, such as a DRAM, an SRAM, a flash memory, or a hard disk. The storage unit 22 functions as a storage means of the base station device 20. The storage unit 22 stores various types of information, for example, "information regarding transmission from an unconnected state (unconnected transmission information)" to be notified to a terminal device.

The control unit 23 is a controller that controls each of the units of the base station device 20. The control unit 23 is implemented by, for example, a processor such as a central processing unit (CPU) or a micro processing unit (MPU). For example, the control unit 23 is implemented by a processor executing various programs stored in a storage device inside the base station device 20 using a random access memory (RAM) or the like as a work area. Note that the control unit 23 may be implemented by an integrated circuit such as an application specific integrated circuit (ASIC) or a field programmable gate array (FPGA). Any of a CPU, an MPU, an ASIC, and an FPGA can be deemed as a controller. The control unit 23 executes various types of processing (including various types of processing described later).

As illustrated in FIG. 4, the control unit 23 includes an acquisition unit 231, a processing unit 232, a reception unit 233, a separation unit 234, and a transmission unit 235. Each of the blocks (acquisition unit 231 to transmission unit 235) included in the control unit 23 is a functional block indicating a function of the control unit 23. These functional blocks may be software blocks or hardware blocks. For example, each of the functional blocks described above may be one software module implemented by software (including microprograms) or may be one circuit block on a semiconductor chip (die). It is naturally understood that each of the functional blocks may be one processor or one integrated circuit. The functional blocks may be configured in any manner. Note that the control unit 23 may be configured by functional units different from the above-described functional blocks. The operation of each of the blocks (acquisition unit 231 to transmission unit 235) included in the control unit 23 is related to transmission and reception processing (Grant Based, Configured Grant, Downlink), transmission processing (transmission from an unconnected state), and others.

<2-4. Configuration of Relay Device>

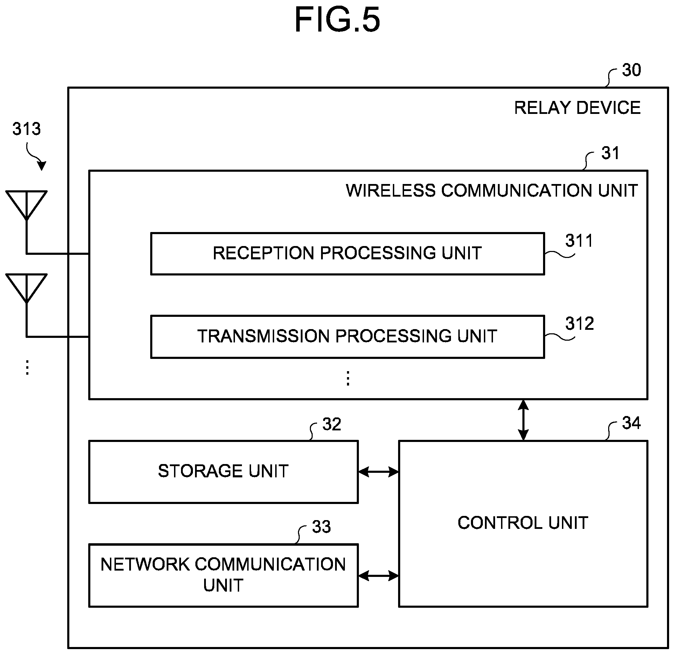

Next, the configuration of a relay devices 30 will be described. FIG. 5 is a diagram illustrating a configuration example of a relay device 30 according to the embodiment of the disclosure. The relay device 30 can perform NOMA communication with a terminal device 40. The relay device 30 includes a wireless communication unit 31, a storage unit 32, a network communication unit 33, and a control unit 34. Note that the configuration illustrated in FIG. 5 is a functional configuration, and the hardware configuration may be different from the functional configuration. Furthermore, the functions of the relay device 30 may be implemented in a distributed manner in a plurality of physically separated configurations.

The wireless communication unit 31 is a wireless communication interface that wirelessly communicates with other wireless communication devices (for example, a base station device 20 and a terminal device 40). The wireless communication unit 31 operates under the control by the control unit 34. The wireless communication unit 31 includes a reception processing unit 311, a transmission processing unit 312, and antennas 313. The configurations of the wireless communication unit 31, the reception processing unit 311, the transmission processing unit 312, and the antennas 313 are similar to those of the wireless communication unit 21, the reception processing unit 211, the transmission processing unit 212, and the antennas 213 of the base station device 20.

The storage unit 32 is a storage device capable of reading and writing data, such as a DRAM, an SRAM, a flash memory, or a hard disk. The storage unit 32 functions as a storage means of the relay device 30. The configuration of the storage unit 32 is similar to that of the storage unit 22 of the base station device 20.

The network communication unit 33 is a communication interface for communicating with other devices. The network communication unit 33 is, for example, a LAN interface such as an NIC. The network communication unit 33 may be a wired interface or a wireless interface. The network communication unit 33 functions as a network communication means of the relay device 30. The network communication unit 33 communicates with the base station device 20 under the control by the control unit 34.

The control unit 34 is a controller that controls each of the units of the relay device 30. The configuration of the control unit 34 is similar to that of the control unit 23 of the base station device 20.

<2-5. Configuration of Terminal Device>

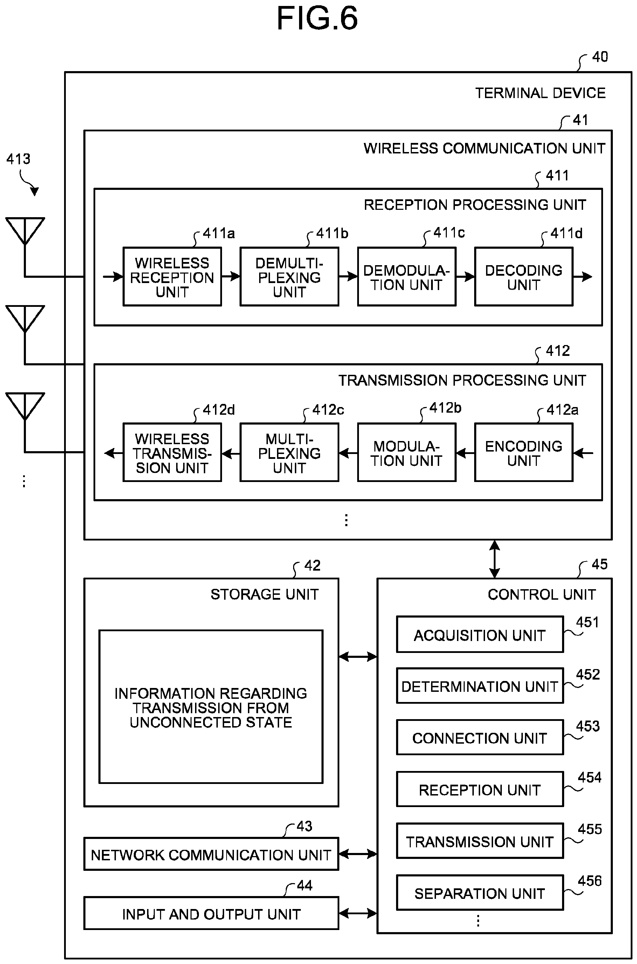

Next, the configuration of a terminal devices 40 will be described. FIG. 6 is a diagram illustrating a configuration example of a terminal device 40 according to the embodiment of the disclosure. The terminal device 40 can perform NOMA communication with a base station device 20 and a relay device 30. The terminal device 40 includes a wireless communication unit 41, a storage unit 42, a network communication unit 43, an input and output unit 44, and a control unit 45. Note that the configuration illustrated in FIG. 6 is a functional configuration, and the hardware configuration may be different from the functional configuration. Furthermore, the functions of the terminal device 40 may be implemented in a distributed manner in a plurality of physically separated configurations.

The wireless communication unit 41 is a wireless communication interface that wirelessly communicates with other wireless communication devices (for example, a base station device 20 and a relay device 30). The wireless communication unit 41 operates under the control by the control unit 45. The wireless communication unit 41 supports one or a plurality of wireless access schemes. For example, the wireless communication unit 41 supports both NR and LTE. The wireless communication unit 41 may support W-CDMA or cdma2000 in addition to NR or LTE. In addition, the wireless communication unit 21 supports communication using NOMA.

The wireless communication unit 41 includes a reception processing unit 411, a transmission processing unit 412, and antennas 413. The wireless communication unit 41 may include a plurality of reception processing units 411, a plurality of transmission processing units 412, and a plurality of antennas 413. Note that, in a case where the wireless communication unit 41 supports a plurality of wireless access schemes, the units of the wireless communication unit 41 can be individually configured for each of the wireless access schemes. For example, the reception processing unit 411 and the transmission processing unit 412 may be individually configured for LTE and NR.

The reception processing unit 411 processes a downlink signal received via an antenna 413. The reception processing unit 411 includes a wireless reception unit 411a, a demultiplexing unit 411b, a demodulation unit 411c, and a decoding unit 411d.

The wireless reception unit 411a performs, on the downlink signal, down-conversion, removal of an unnecessary frequency component, control of the amplification level, quadrature demodulation, conversion to a digital signal, removal of a guard interval, extraction of a frequency domain signal by fast Fourier transform, and others. The demultiplexing unit 411b demultiplexes the downlink channel, a downlink synchronization signal, and the downlink reference signal from the signal output from the wireless reception unit 411a. The downlink channel is, for example, a channel such as a physical broadcast channel (PBCH), a physical downlink shared channel (PDSCH), or a physical downlink control channel (PDCCH). The demodulation unit 211c demodulates the reception signal using a modulation scheme such as BPSK, QPSK, 16QAM, 64QAM, or 256QAM on the modulation symbol of the downlink channel. The decoding unit 411d performs decoding processing on the demodulated encoded bits of the downlink channel. The decoded downlink data and downlink control information are output to the control unit 45.

The transmission processing unit 412 performs transmission processing of uplink control information and uplink data. The transmission processing unit 412 includes an encoding unit 412a, a modulation unit 412b, a multiplexing unit 412c, and a wireless transmission unit 412d.

The encoding unit 412a encodes the uplink control information and the uplink data input from the control unit 45 using an encoding scheme such as block encoding, convolutional encoding, or turbo encoding. The modulation unit 412b modulates the coded bits output from the encoding unit 412a by a predetermined modulation scheme such as BPSK, QPSK, 16QAM, 64QAM, or 256QAM. The multiplexing unit 412c multiplexes a modulation symbol and an uplink reference signal of each channel and allocates the multiplexed symbol in a predetermined resource element. The wireless transmission unit 412d performs various types of signal processing on the signal from the multiplexing unit 412c. For example, the wireless transmission unit 412d performs processing such as conversion into the time domain by inverse fast Fourier transform, addition of a guard interval, generation of a baseband digital signal, conversion into an analog signal, quadrature modulation, up-conversion, removal of an excessive frequency component, or power amplification. The signal generated by the transmission processing unit 412 is transmitted from an antenna 413.

The storage unit 42 is a storage device capable of reading and writing data, such as a DRAM, an SRAM, a flash memory, or a hard disk. The storage unit 42 functions as a storage means of the terminal device 40. The storage unit 42 stores various types of information, for example, "information regarding transmission from an unconnected state (unconnected transmission information)" acquired from the base station device 20.

The network communication unit 43 is a communication interface for communicating with other devices. The network communication unit 43 is, for example, a LAN interface such as an NIC. The network communication unit 43 may be a wired interface or a wireless interface. The network communication unit 43 functions as a network communication means of the terminal device 40. The network communication unit 43 communicates with other devices under the control by the control unit 45.

The input and output unit 44 is a user interface for exchanging information with a user. For example, the input and output unit 44 is an operation device for the user to perform various operations, such as a keyboard, a mouse, operation keys, or a touch panel. In addition, the input and output unit 44 is a display device such as a liquid crystal display or an organic electroluminescence (EL) display. The input and output unit 44 may be an acoustic device such as a speaker or a buzzer. Furthermore, the input and output unit 44 may be a lighting device such as a light emitting diode (LED) lamp. The input and output unit 44 functions as an input and output unit (input means, output means, operation means, or notification means) of the terminal device 40.

The control unit 45 is a controller that controls each of the units of the terminal device 40. The control unit 45 is implemented by, for example, a processor such as a CPU or an MPU. For example, the control unit 45 is implemented by a processor executing various programs stored in the storage device inside the terminal device 40 using a RAM or the like as a work area. Note that the control unit 45 may be implemented by an integrated circuit such as an ASIC or an FPGA. Any of a CPU, an MPU, an ASIC, and an FPGA can be deemed as a controller. The control unit 45 executes various types of processing (including various types of processing described later).

As illustrated in FIG. 6, the control unit 45 includes an acquisition unit 451, a determination unit 452, a connection unit 453, a reception unit 454, a transmission unit 455, and a separation unit 456. Each of the blocks (acquisition unit 451 to separation unit 456) included in the control unit 45 is a functional block indicating a function of the control unit 45. These functional blocks may be software blocks or hardware blocks. For example, each of the functional blocks described above may be one software module implemented by software (including microprograms) or may be one circuit block on a semiconductor chip (die). It is naturally understood that each of the functional blocks may be one processor or one integrated circuit. The functional blocks may be configured in any manner. Note that the control unit 45 may be configured by functional units different from the above-described functional blocks. The operation of each of the blocks (acquisition unit 451 to separation unit 456) included in the control unit 45 is related to transmission and reception processing (Grant Based, Configured Grant, Downlink), transmission processing (transmission from an unconnected state), and others.

<2-6. Radio Frame Structure>

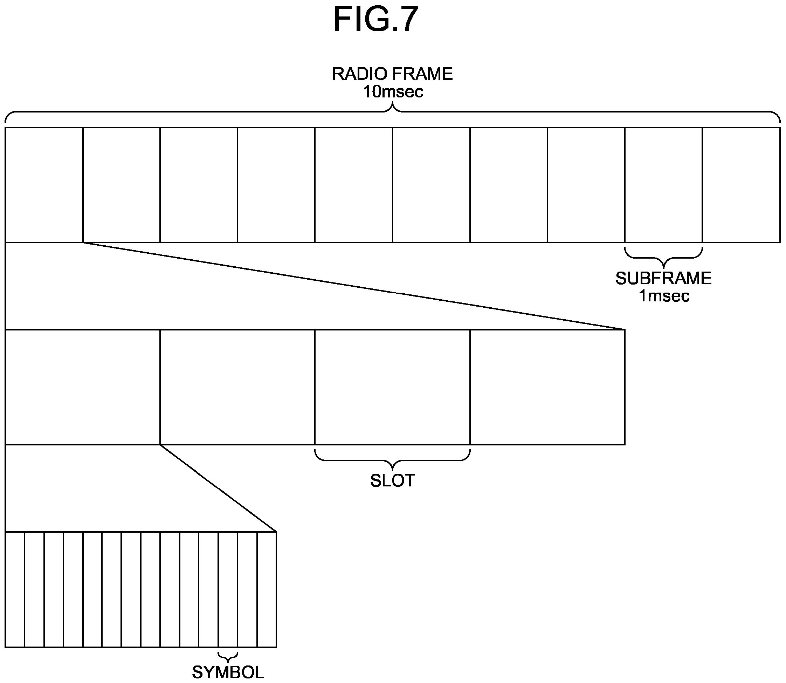

Next, an NR frame structure will be described as an example of radio frame structure. As illustrated in FIG. 7, each radio frame of 10 ms consists of two half frames. A time interval of a half frame is 5 ms. Each half frame consists of five subframes. In addition, one subframe includes one or more slots. One slot consists of fourteen symbols in a case of a normal CP and twelve symbols in a case of an extended CP.

A radio resource in this embodiment includes one or more resource elements (REs). A resource element is defined by one symbol and one subcarrier. A resource block is defined by twelve consecutive subcarriers with respect to the frequency. A physical resource block (PRB) is defined as a resource block within a predetermined bandwidth part (BWP). A virtual resource block (VRB) is used for mapping between a complex number signal that is output and a physical resource block.

(Subcarrier Spacing)

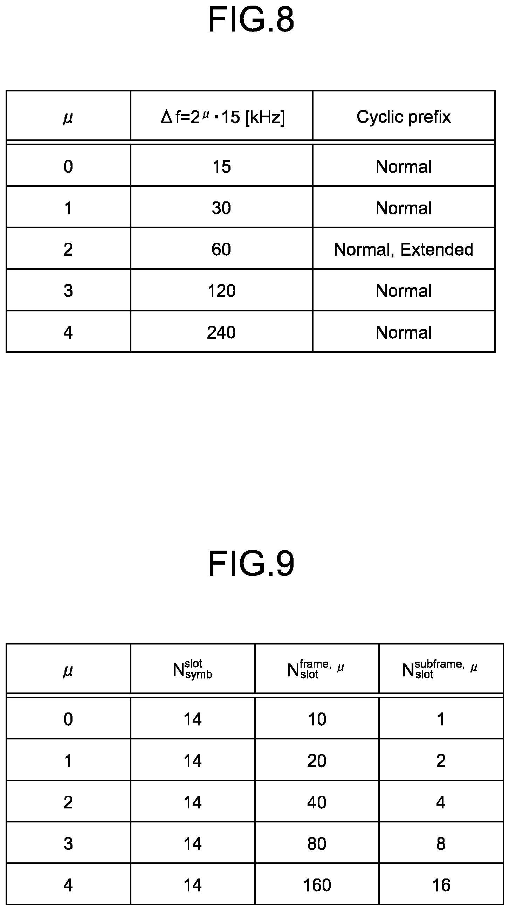

In NR, subcarrier spacing (SCS) of OFDM can be modified. In TS 38.211, as illustrated in FIG. 8, a correspondence table of a parameter $\mu$ indicating OFDM numerology, the SCS ($\Delta f = 2^{\mu} \cdot 15$ [kHz]), and the cyclic prefix is defined. The SCS is set at $2^{\mu} \cdot 15$ kHz. In NR up to Rel-16, SCS up to 120 kHz for data transmission and SCS up to 240 kHz for SS/PBCH blocks are supported.

(Slot)

In NR, the slot length and the symbol length decrease as the OFDM numerology increases. In TS 38.211, as illustrated in FIG. 9, the parameter $\mu$ indicating the OFDM numerology, the number of symbols per slot (N slot symb), the number of slots per radio frame (N frame, $\mu$ slot), and the number of slots per subframe (N subframe, $\mu$ slot) are defined. The number of symbols per slot is fixed being fourteen regardless of $\mu$. On the other hand, the number of slots per radio frame and the number of slots per subframe fluctuate depending on $\mu$.

(Frequency Range)

In NR, a predetermined frequency is defined as a frequency range (FR). A frequency in a range between 0.41 GHz and 7.125 GHz is defined as Frequency Range 1 (FR1: first frequency range). A frequency in a range between 24.25 GHz and 52.6 GHz is defined as Frequency Range 2 (FR2: second frequency range). Furthermore, a frequency in a range between 7.125 GHz and 24.25 GHz is defined as Frequency Range 3 (FR3: third frequency range).

(PDCCH)

In downlink radio communication from a base station device 20 (or a relay device 30 that is a type of the base station devices 20: hereinafter, simply referred to as a base station device 20) to a terminal device 40, for example, a physical downlink control channel (PDCCH) is used as a downlink physical channel. The PDCCH is used to transmit scheduling of a physical downlink shared channel (PDSCH), scheduling of a physical uplink shared channel (PUSCH), signaling shared among a terminal device group, and others.

The PDCCH is also used to transmit downlink control information (DCI). Examples of the signaling shared among a terminal device group include specifying a slot format (Slot Format Indicator (SFI)), notification of interrupt transmission (interrupted transmission indicator, pre-emption indication), a transmission power control command (Transmission Power Control Commands (TPC commands), SRS switching, and others.

As DCI (uplink grant) for scheduling PUSCH, DCI format 0 (e.g. DCI format 0_0, DCI format 0_1, DCI format 0_2) is used. Furthermore, as DCI (downlink grant, downlink assignment) for scheduling PDSCH, DCI format 1 (e.g. DCI format 1_0, DCI format 1_1, DCI format 1_2) is used. As signaling shared among a terminal device group, DCI format 2 (e.g. DCI format 2_0, DCI format 2_1, DCI format 2_2) is used.

In addition, a cyclic redundancy check (CRC) is added to PDCCH, and the CRC is scrambled by a predetermined radio network temporary identifier (RNTI). Examples of the RNTI include C-RNTI, Temporary C-RNTI (TC-RNTI), SI-RNTI, RA-RNTI, SFI-RNTI, and others. PDCCH to which the CRC scrambled with the terminal device-specific RNTI (for example, C-RNTI or TC-RNTI) is added is terminal device-specific PDCCH. Meanwhile, PDCCH to which the CRC scrambled with a terminal device-shared (for example, SI-RNTI, RA-RNTI, or P-RNTI) is added is PDCCH shared by terminal devices. PDCCH to which the CRC scrambled with an RNTI (for example, SFI-RNTI or INT-RNTI) shared among a terminal device group is added is PDCCH shared by the terminal device group.

In addition, PDCCH includes one or a plurality of Control-Channel Elements (CCEs). An aggregation level of 1, 2, 4, 8, or 16 is set in the PDCCH. The aggregation level and the number of CCEs of the PDCCH used for transmission correspond to each other. By using PDCCH transmission with a high aggregation level, coverage of the PDCCH can be improved.

Meanwhile, PDCCH is allocated in a physical resource together with a Control Resource Set (CORESET). CORESET includes a plurality of resource blocks and one, two, or three symbols. In CORESET, a plurality of Control-Channel Elements (CCEs) is allocated. One CCE consists of six REGs (Resource-Element Groups). One REG consists of one resource block and one symbol. A plurality of CORESETs can be set in a terminal device 40. The terminal device 40 monitors a search space set in a CORESET. Note that a CORESET set by MIB is referred to as CORESET #0 (or CORESET with index 0). The configuration of CORESET #0 may be overwritten by RRC signaling.

Incidentally, PDCCH is placed in the search space. One or more search spaces are set in the terminal device 40. The terminal device 40 monitors one or more search spaces. In a search space, a Common Search Space (CSS) and a UE-specific Search Space (USS) are defined. A PDCCH that can be decoded by one or more terminal devices 40 is placed in the CSS, and a PDCCH that can be decoded by one terminal device 40 is placed in the USS. A terminal device-shared PDCCH is located in the CSS, and a terminal device-specific PDCCH is located in the CSS or the USS. Various search space sets such as a Type0-PDCCH CSS set, a Type0A-PDCCH CSS set, a Type1-PDCCH CSS set, a Type2-PDCCH CSS set, a Type3-PDCCH CSS set, and a USS set can be set in a terminal device 40.

Type0-PDCCH CSS set is a search space set used for transmission of SIB1 (System Information Block 1, Remaining Minimum System Information (RMSI)). Type0A-PDCCH CSS set is a search space set used for transmission of other system information (SIB) other than the SIB1. Type1-PDCCH CSS set is a search space set used for transmission of a random access response (Random Access Response (RAR), Msg2, Message 2), contention resolution (contention resolution, Msg4, Message 4), and MsgB (Message B, RAR or Msg2 of 2-step RACH). Type2-PDCCH CSS set is a search space set used for transmission of paging. Type3-PDCCH CSS set is a search space set used for transmission of PDCCH shared among a terminal device group. A USS set is a search space set used for transmission of terminal device-specific PDCCH.

(DCI Field of Downlink Grant)

DCI includes a plurality of pieces of information. The format of information is defined by a field.

DCI format 1_0 includes some or all of an identifier for DCI formats, a frequency domain resource assignment, a time domain resource assignment, VRB-to-PRB mapping, modulation and coding schemes (MCSs), a New Data Indicator (NDI), a redundancy version (RV), a HARQ process number, a Downlink Assignment Index (DAI), a TCP command for scheduled PUCCH, a PUCCH resource indicator, a PDSCH-to-HARQ_feedback timing indicator, and a combination of a channel access type and a CP extension (ChannelAccess-CPext).

DCI format 1_1 includes some or all of an identifier for DCI formats, a carrier indicator, a bandwidth part (BWP) indicator, a frequency domain resource assignment, a time domain resource assignment, VRB-to-PRB mapping, a PRB bundling size indicator, a ZP CSI-RS trigger, modulation and coding schemes (MCSs), a new data indicator (NDI), a redundancy version (RV), a HARQ process number, a Downlink Assignment Index (DAI), a TCP command for scheduled PUCCH, a PUCCH resource indicator, PDSCH-to-HARQ_feedback timing indicator (PDSCH-to-HARQ_feedback timing indicator), one-shot HARQ-ACK request, a PDSCH group index (PDSCH group index), a New Feedback Indicator (NFI), the number of requested PDSCH groups, an antenna port, Transmission Configuration Indication (TCI), an SRS request, CBG transmission information (CBGTI), CBG flushing out information (CBGFI), DMRS sequence initialization, a priority indicator, combination of channel access type and CP extension (ChannelAccess-CPext), a minimum applicable scheduling offset indicator), and an SCell dormancy indication.

(DMRS of PDCCH)

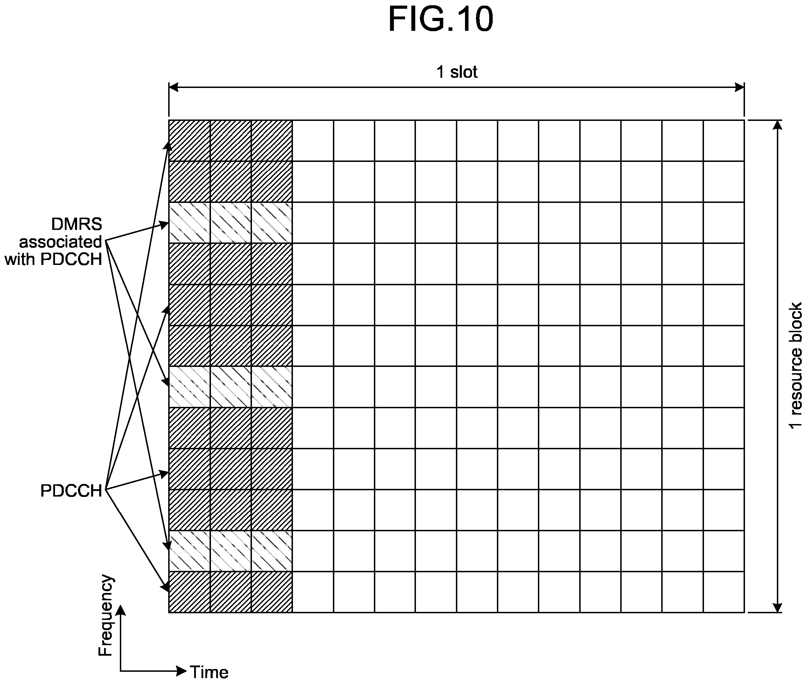

DMRS of PDCCH is included in symbols in which the PDCCH is transmitted. The DMRS of the PDCCH is a demodulation reference signal associated with the PDCCH (downlink demodulation reference signal). As illustrated in FIG. 10, DMRS of PDCCH is allocated every other three resource blocks (REs) on the frequency axis (Frequency).

Specifically, DMRS of PDCCH is allocated on the second, sixth, and tenth subcarriers in the resource block. The DMRS configuration of FIG. 10 is referred to as a first DMRS configuration.

(PDCCH Monitoring)

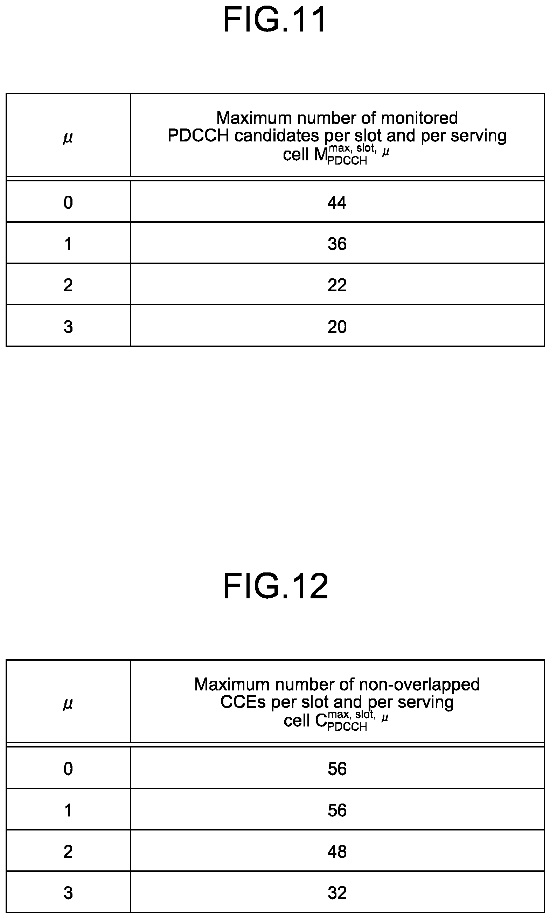

In TS 38.213 up to Rel-16, the maximum number of PDCCH candidates to be monitored per slot is limited for the purpose of reducing the power consumption of the terminal device 40. As illustrated in FIG. 11, the maximum number of PDCCH candidates to be monitored is set depending on the SCS (numerology, $\mu$), and the higher the SCS is, the lower the maximum number is.

Similarly, in TS 38.213 up to Rel-16, the maximum number of the number of CCEs per slot is limited. The maximum number of the number of CCEs (maximum number of non-overlapped CCEs) is set depending on the SCS (numerology, $\mu$) as illustrated in FIG. 12, and the maximum number is lower as the SCS is higher.

(Multi-Slot PDSCH/PUSCH Repetition)

A plurality of PDSCHs or PUSCHs of the same HARQ process can be scheduled with one piece of DCI. This transmission method is referred to as repetition, slot aggregation, or the like. For example, it is possible to schedule PDSCHs of the same Hybrid Automatic Repeat reQuest (HARQ) process in a plurality of slots by one downlink grant. It is also possible to schedule PUSCHs of the same HARQ process in a plurality of slots with one uplink grant (this method is also referred to as repetition type A). It is further possible to schedule a plurality of PUSCHs of the same HARQ process in one slot with one uplink grant (this method is also referred to as repetition type B).

In repetition type A, the number of repetitions is specified by an upper layer parameter (AggregationFactor). In repetition type B, the number of repetitions is specified by an upper layer parameter (numberofrepetitions) included in a Time Domain Resource Allocation (TDRA) table configured in an upper layer.

(Multi-Slot PUSCH Scheduling)

In Rel-15, PUSCH can be scheduled in one slot with one uplink grant. Furthermore, in Rel-16, PUSCHs of different HARQ processes can be scheduled in a plurality of slots with one uplink grant.

In multi-slot PUSCH scheduling, the number of PUSCHs is specified by the number of valid SLIVs in the Time Domain Resource Allocation (TDRA) table configured in an upper layer. As for the MCS, the same MCS is specified for all the PUSCHs to be scheduled. The NDI and the RV are individually specified for each of the PUSCHs to be scheduled.

(Non-Numerical K1 Value (NN-K1 Value))

In NR, an offset value k1 from a slot in which a PDSCH is scheduled to a slot to which a HARQ-ACK (acknowledgement) corresponding to the PDSCH is fed back is specified as a PDSCH-to-HARQ_feedback timing indicator. The offset value k1 is an integer greater than or equal to 0.

Furthermore, in Rel-16 NR-U, indication information (NN-K1: Non-Numerical K1 value) that does not specify a slot to which HARQ-ACK is fed back is introduced. The NN-K1, which is an example of the indication information, and specified HARQ-ACK are fed back at feedback timing specified by subsequent DCI.

(HARQ Codebook)

In NR, a plurality of HARQ-ACKs can be multiplexed and transmitted by one feedback resource (PUCCH or PUSCH). Methods for multiplexing HARQ-ACKs include Type 1 HARQ codebook (semi-static HARQ codebook) and Type 2 HARQ codebook (dynamic HARQ codebook).

Type 1 HARQ codebook is a method of multiplexing HARQ-ACKs of all PDSCHs that may be scheduled at that feedback timing. In the Type 1 HARQ codebook, the decoding success/failure result of the PDSCH is inserted into the HARQ-ACK of the scheduled PDSCH, and the NACK is inserted into the HARQ-ACK of the PDSCH that is not scheduled.

Type 2 HARQ codebook is a method of multiplexing only HARQ-ACKs of PDSCHs that are scheduled at that feedback timing. A Downlink Assignment Index (DAI) included in DCI is used to determine the number of HARQ-ACKs to be multiplexed. The size of the HARQ codebook is determined on the basis of the DAI of the DCI that has been received most recently at feedback timing.

Furthermore, in Rel-16 NR-U, Enhanced Type 2 HARQ codebook and Type 3 HARQ codebook are introduced. These multiplexing methods can be used to specify the feedback timing of HARQ-ACK of the NN-K1.

In Enhanced Type 2 HARQ codebook, a PDSCH belongs to either one of two PDSCH groups. A PDSCH group to feed back is specified by the number of requested PDSCH groups included in the DCI. For example, in a case where one PDSCH group is specified by the number of requested PDSCH groups, HARQ-ACK of PDSCH belonging to the scheduled PDSCH group is fed back, and in a case where two PDSCH groups are specified by the number of requested PDSCH groups, HARQ-ACKs of all PDSCHs are fed back.

In Type 3 HARQ codebook, HARQ-ACKs of all HARQ processes are fed back. In Type 3 HARQ codebook, in a case where HARQ-ACK feedback by Type 3 HARQ codebook is specified by a one-shot HARQ-ACK request included in the DCI, HARQ-ACKs of all HARQ processes are fed back.

<3. Examples>

Next, examples (first example and second example) will be described. In the examples, in a base station device 20, slots for which PDCCH is not monitored are set, and PDSCH is scheduled from one slot, for which PDCCH is monitored, to a plurality of slots for which PDCCH is not monitored. This makes it possible to maintain the PDSCH peak rate while reducing the frequency of PDCCH monitoring. Hereinafter, the first example and the second example will be described in detail.

<3-1. First Example: multi-slot PDSCH scheduling by one DCI>

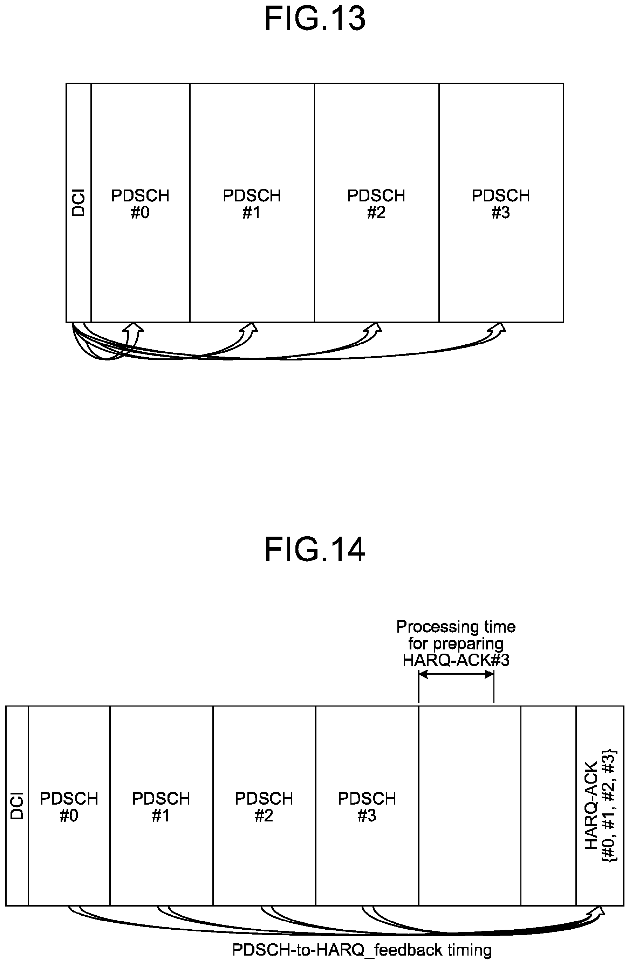

As illustrated in FIG. 13, the base station device 20 schedules a plurality of PDSCHs having different HARQ process IDs (HARQ process numbers) with one piece of DCI. As a result, it is possible to schedule a plurality of PDSCHs with less overhead. However, it is necessary to extend the DCI for performing multi-slot PDSCH scheduling. The HARQ process ID is an example of HARQ process identification information.

<3-1-1. HARQ-ACK Feedback Timing>

In the present embodiment, the HARQ-ACK feedback timing is determined in accordance with a predetermined condition.

[Example 1] A terminal device 40 feeds back the HARQ-ACKs (hybrid automatic repeat request acknowledgements) at the same feedback timing with respect to a plurality of HARQ-ACKs corresponding to the plurality of PDSCHs scheduled by the one piece of DCI.

The DCI includes a field indicating one PDSCH-to-HARQ_feedback timing (feedback timing). The HARQ-ACKs corresponding to all the PDSCHs are fed back from the terminal device 40 to the base station device 20 with one specified PDSCH-to-HARQ_feedback timing.

In the above case, in the base station device 20, as illustrated in FIG. 14, in all the scheduled PDSCHs, the HARQ-ACK feedback timing (PDSCH-to-HARQ_feedback timing) is not specified before the processing time for preparing the HARQ-ACKs (processing time for preparing HARQ-ACK #3). That is, in all the scheduled PDSCHs, the HARQ-ACK feedback timing is specified after the processing time for preparing the HARQ-ACKs.

That is, in this example, the HARQ-ACK feedback timing is determined on the basis of the processing time for preparing the HARQ-ACKs corresponding to all the scheduled PDSCHs.

In the terminal device 40, it is not presumed that the HARQ-ACK feedback timing is specified before the processing time for preparing the HARQ-ACKs in all the scheduled PDSCHs. In other words, in the terminal device 40, it is presumed that the HARQ-ACK feedback timing is specified after the processing time for preparing the HARQ-ACKs in all the scheduled PDSCHs.

As a method of specifying the HARQ feedback timing in one PDSCH-to-HARQ_feedback timing, the following method is one example.

As one example, one PDSCH-to-HARQ_feedback timing specifies the slot offset k1 from the PDSCH in the heading slot to the HARQ feedback timing. As a specific example, in FIG. 14, one PDSCH-to-HARQ_feedback timing specifies a slot offset k1 from a slot of PDSCH #0 to the HARQ feedback timing. In the example of FIG. 14, k1 specifies after five slots.

As an example, one PDSCH-to-HARQ_feedback timing specifies a slot offset k1 from the PDSCH of the last slot to the HARQ feedback timing. As a specific example, in FIG. 14, one PDSCH-to-HARQ_feedback timing specifies a slot offset k1 from the slot of PDSCH #3 to the HARQ feedback timing. In the example of FIG. 14, k1 specifies after two slots.

[Example 2] A plurality of PDSCHs scheduled by multi-slot scheduling is divided into a first PDSCH group and a second PDSCH group for determining HARQ-ACK feedback timing.

In Example 2, unlike in Example 1, there is a problem that a round-trip delay of a previously scheduled PDSCH becomes large while preparation for the HARQ-ACK feedback of all the PDSCHs is performed. In particular, in a case where the round-trip delay of HARQ-ACK for PDSCH with a low delay requirement increases, there is a possibility that the requirement value cannot be met.

Therefore, in Example 2, PDSCH-to-HARQ_feedback timing is specified for only some PDSCHs (first PDSCH group). HARQ-ACKs of some PDSCHs are fed back with specified PDSCH-to-HARQ_feedback timing.

Meanwhile, HARQ-ACKs of the remaining PDSCHs (second PDSCH group) are processed to be specified as NN-K1 value. The NN-K1 value is an example of indication information in which no HARQ-ACK feedback timing is specified.

The HARQ-ACK specified as the NN-K1 value is fed back using feedback timing of DCI transmitted later (for example, subsequently). The HARQ-ACK specified as the NN-K1 value is fed back by using Type 2 HARQ codebook, Enhanced Type 2 HARQ codebook, and/or Type 3 HARQ codebook.

As an example of the some PDSCHs, there are PDSCHs in which HARQ-ACK feedback preparation is completed by PDSCH-to-HARQ_feedback timing.

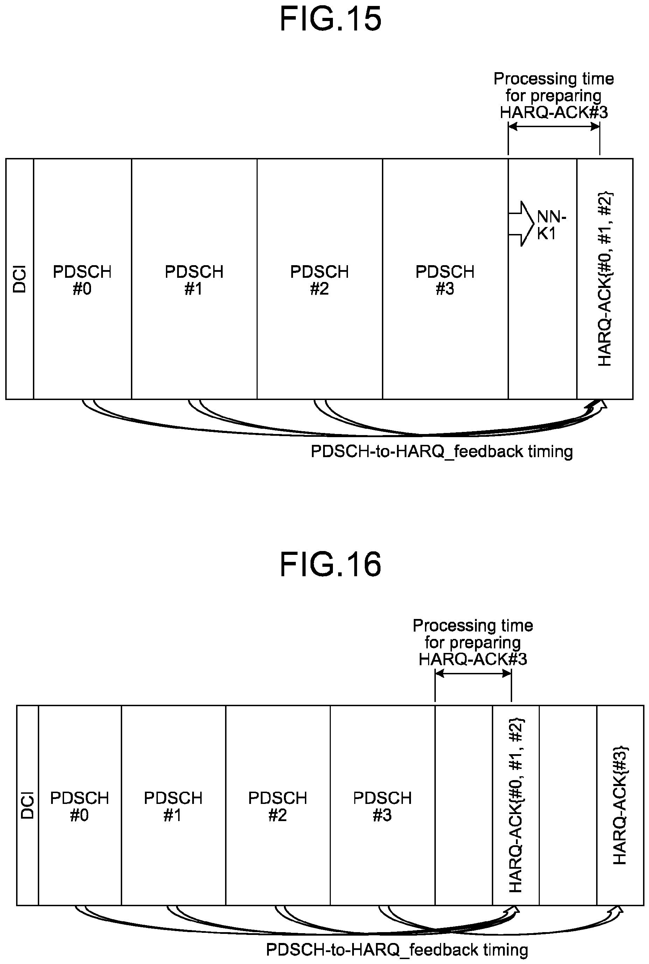

As illustrated in FIG. 15, the terminal device 40 feeds back a plurality of HARQ-ACKs corresponding to a plurality of PDSCHs scheduled by one piece of DCI at the same feedback timing, however, in a case where a HARQ-ACKs cannot be returned, the HARQ-ACK is regarded as a Non-Numerical (NN)-K1 value (NN-K1 value).

That is, the HARQ-ACK feedback timing is determined on the basis of the processing time for preparing HARQ-ACK corresponding to each scheduled PDSCH and HARQ-ACK feedback timing specified by the DCI. HARQ-ACK whose transmission preparation completes before the HARQ-ACK feedback timing specified by the DCI is fed back at the HARQ-ACK feedback timing specified by the DCI, and HARQ-ACK whose transmission preparation completes after the HARQ-ACK feedback timing specified by the DCI is fed back at HARQ-ACK feedback timing specified by DCI that is different from the above DCI.

Another example of the some PDSCHs is PDSCHs specified as high priorities by priority indication (Priority Indicator).

The feedback timing of a corresponding HARQ-ACK is determined depending on the priority of the PDSCH. HARQ-ACK corresponding to a PDSCH specified as a high priority is fed back at the HARQ-ACK feedback timing specified by DCI, and HARQ-ACK corresponding to a PDSCH specified as a low priority is fed back at HARQ-ACK feedback timing specified by DCI that is different from the above DCI.

Another example of the some PDSCHs is a predetermined number of PDSCHs.

For example, in a case where a predetermined number or more of PDSCHs are scheduled, HARQ-ACKs corresponding to the predetermined number of PDSCHs from the head are fed back at the HARQ-ACK feedback timing specified by DCI, and HARQ-ACKs corresponding to PDSCHs after the predetermined number are fed back at HARQ-ACK feedback timing specified by DCI that is different from the above DCI.

The predetermined number may be determined in advance or may be set by RRC.

As a method of specifying the HARQ feedback timing in Example 2, a method similar to that in Example 1 can be applied.

As one example, one PDSCH-to-HARQ_feedback timing specifies the slot offset k1 from the PDSCH in the heading slot to the HARQ feedback timing. As a specific example, in FIG. 15, one PDSCH-to-HARQ_feedback timing specifies a slot offset k1 from the slot of PDSCH #0 to the HARQ feedback timing. In the example of FIG. 15, k1 specifies after four slots.

As an example, one PDSCH-to-HARQ_feedback timing specifies a slot offset k1 from the PDSCH of the last slot to the HARQ feedback timing. As a specific example, in FIG. 15, one PDSCH-to-HARQ_feedback timing specifies a slot offset k1 from the slot of PDSCH #3 to the HARQ feedback timing. In the example of FIG. 15, k1 specifies after one slot.

[Example 3] A plurality of PDSCHs scheduled by multi-slot scheduling is divided into a plurality of PDSCH groups for determining HARQ-ACK feedback timing.

As an example, as illustrated in FIG. 16, the terminal device 40 feeds back a plurality of HARQ-ACKs corresponding to the plurality of PDSCHs scheduled by one piece of DCI at different feedback timings.

[Method for Specifying Feedback Timing of Plurality of HARQ-ACKs]

(1) The feedback timing of each HARQ-ACK is specified (designated) by a field of a plurality of PDSCH-to-HARQ_feedback timings included in one piece of DCI (a field specifying the HARQ-ACK feedback timings). As a result, the feedback timing can be flexibly set.

(1-1) In a case where PDSCH scheduled by multi-slot scheduling and a field of PDSCH-to-HARQ_feedback timing are associated with each other on a one-to-one basis, each HARQ-ACK feedback timing follows timing specified by corresponding PDSCH-to-HARQ_feedback timing. The number of bits of the field of the PDSCH and the PDSCH-to-HARQ_feedback timing is determined by the number of bits of the PDSCH-to-HARQ_feedback timing (for example, 4 bits) × the maximum number of PDSCHs to be scheduled.

As a method of specifying the HARQ feedback timing in a plurality of PDSCH-to-HARQ_feedback timings, the following method is one example.

As an example, each PDSCH-to-HARQ_feedback timing specifies a slot offset k1 from the slot of each corresponding PDSCH to the HARQ feedback timing. As a specific example, in FIG. 16, four PDSCH-to-HARQ_feedback timings are included. A first PDSCH-to-HARQ_feedback timing corresponds to PDSCH #0, and k1 specifies after four slots. A second PDSCH-to-HARQ_feedback timing corresponds to PDSCH #1, and k1 specifies after three slots. A third PDSCH-to-HARQ_feedback timing corresponds to PDSCH #2, and k1 specifies after two slots. A fourth PDSCH-to-HARQ_feedback timing corresponds to PDSCH #3, and k1 specifies after two slots.

As an example, the first PDSCH-to-HARQ_feedback timing specifies the slot offset k1 from the slot of the heading PDSCH to the HARQ feedback timing, and subsequent PDSCH-to-HARQ_feedback timings specify an offset from the first HARQ feedback timing to the subsequent HARQ feedback timings. As a specific example, in FIG. 16, four PDSCH-to-HARQ_feedback timings are included. A first PDSCH-to-HARQ_feedback timing corresponds to PDSCH #0, and k1 specifies after four slots. The second PDSCH-to-HARQ_feedback timing corresponds to PDSCH #1, and k1 specifies after zero slots. The third PDSCH-to-HARQ_feedback timing corresponds to PDSCH #2, and k1 specifies after zero slots. The fourth PDSCH-to-HARQ_feedback timing corresponds to PDSCH #3, and k1 specifies after one slot.

As an example, the first PDSCH-to-HARQ_feedback timing specifies the slot offset k1 from the slot of the heading PDSCH to the HARQ feedback timing, and subsequent PDSCH-to-HARQ_feedback timings specify an offset from a preceding HARQ feedback timing to a subsequent HARQ feedback timings.

(1-2) In a case where PDSCH scheduled by multi-slot scheduling and a field of PDSCH-to-HARQ_feedback timing are associated with each other on a one-to-others basis, explicit grouping is performed.

That is, in this example, the HARQ-ACK feedback timing is determined on the basis of an explicitly specified HARQ-ACK feedback timing group.

As an example of explicit grouping, grouping is performed by RRC configuration. A plurality of PDSCHs and PDSCH-to-HARQ_feedback timings are associated with each other by RRC configuration. As a specific example, in a case where two PDSCH-to-HARQ_feedback timings are included in DCI that schedules four PDSCHs, RRC is configured so that a first PDSCH-to-HARQ_feedback timing corresponds to the first two PDSCHs and that a second PDSCH-to-HARQ_feedback timing corresponds to the latter two PDSCHs. The number of bits of the fields of the PDSCH and the PDSCH-to-HARQ_feedback timing is specified by the RRC configuration.

That is, in the present example, the HARQ-ACK feedback timing is determined on the basis of the HARQ-ACK feedback timing group specified in the RRC configuration. The first HARQ-ACK feedback timing and the first HARQ-ACK feedback timing are specified by the DCI. In a case where HARQ-ACK is associated with the first HARQ-ACK feedback timing group by RRC configuration, the HARQ-ACK is fed back at the first HARQ-ACK feedback timing, and in a case where HARQ-ACK is associated with the second HARQ-ACK feedback timing group, the HARQ-ACK is fed back at the first HARQ-ACK feedback timing group.

As an example of explicit grouping, grouping is performed by a field different from the fields of the PDSCH and the PDSCH-to-HARQ_feedback timing. It is conceivable that the field different from the fields of the PDSCH and the PDSCH-to-HARQ_feedback timing includes, for example, a field for specifying a priority (Priority Indicator) or specifies a PDSCH group (PDSCH group index), or others. As a specific example, in a case where DCI includes two PDSCH-to-HARQ_feedback timings and further includes a plurality of Priority Indicators so as to correspond to respective PDSCHs, grouping is performed by the Priority Indicators so that PDSCH specified as a high priority corresponds to the first PDSCH-to-HARQ_feedback timing and that PDSCH specified as a low priority is corresponds to the second PDSCH-to-HARQ_feedback timing. Here, the first PDSCH-to-HARQ_feedback timing desirably specifies timing earlier than the second PDSCH-to-HARQ_feedback timing. As a result, a delay of the HARQ-ACK of the high-priority PDSCH can be reduced.

That is, in the present example, the HARQ-ACK feedback timing is determined on the basis of the HARQ-ACK feedback timing group specified by the DCI. The first HARQ-ACK feedback timing and the first HARQ-ACK feedback timing are specified by the DCI. In a case where HARQ-ACK is associated with the first HARQ-ACK feedback timing group by DCI, the HARQ-ACK is fed back at the first HARQ-ACK feedback timing, and in a case where HARQ-ACK is associated with the second HARQ-ACK feedback timing group, the HARQ-ACK is fed back at the first HARQ-ACK feedback timing group.

(1-3) In a case where PDSCH scheduled by multi-slot scheduling and a field of PDSCH-to-HARQ_feedback timing are associated with each other on a one-to-others basis, grouping is implicitly performed.

That is, in the present example, the HARQ-ACK feedback timing is determined on the basis of the implicitly specified HARQ-ACK feedback timing group.

As an example of implicit grouping, grouping is performed by processing time for preparing HARQ-ACK transmission. As a specific example, in a case where DCI for scheduling a plurality of PDSCHs includes the fields of the two PDSCH-to-HARQ_feedback timings, grouping is performed so that the first PDSCH-to-HARQ_feedback timing corresponds to PDSCH whose feedback timing is in time for it, and the second PDSCH-to-HARQ_feedback timing corresponds to PDSCH that is not in time for the first PDSCH-to-HARQ_feedback timing.

That is, in the present example, the HARQ-ACK feedback timing is determined on the basis of the processing time for preparing for the HARQ-ACK transmission. The first HARQ-ACK feedback timing and the first HARQ-ACK feedback timing are specified by the DCI. In a case where the preparation for the HARQ-ACK transmission is completed before the processing time for preparing for the HARQ-ACK transmission, the HARQ-ACK is fed back at the first HARQ-ACK feedback timing; and in a case where the preparation for the HARQ-ACK transmission is completed after the processing time for preparing for the HARQ-ACK transmission, the HARQ-ACK is fed back at the second HARQ-ACK feedback timing group.

As an example of implicit grouping, grouping is performed by the number of HARQ-ACKs. For example, grouping is performed in a case where the number of HARQ-ACKs fed back exceeds a predetermined value by multi-slot PDSCH scheduling.

As a result, the number of one HARQ codebook can be limited, and thus the coverage of PUCCH used for HARQ-ACK feedbacks can be maintained.

That is, in the present example, the HARQ-ACK feedback timing is determined on the basis of the number of HARQ-ACKs to be fed back. The first HARQ-ACK feedback timing and the first HARQ-ACK feedback timing are specified by the DCI. If the number of HARQ-ACKs is greater than or equal to the predetermined value, the HARQ-ACKs, the number of which is the predetermined value, are fed back at the first HARQ-ACK feedback timing, and the rest of HARQ-ACKs are fed back at the second HARQ-ACK feedback timing group.

The predetermined value may be determined in advance or may be set by RRC.

As a method of specifying the HARQ feedback timing in a plurality of PDSCH-to-HARQ_feedback timings, the following method is one example.

As an example, each PDSCH-to-HARQ_feedback timing specifies a slot offset k1 from the slot of the heading PDSCH to the HARQ feedback timing. As a specific example, in FIG. 16, in a case where the two PDSCH-to-HARQ_feedback timings are included in the DCI for scheduling the four PDSCHs, the first PDSCH-to-HARQ_feedback timing specifies a slot offset k1 from PDSCH #0 to the HARQ feedback timing. In the example of FIG. 16, a case of after four slots is illustrated. The second PDSCH-to-HARQ_feedback timing specifies a slot offset k1 from PDSCH #0 to the HARQ feedback timing. In the example of FIG. 16, a case of after five slots is illustrated.

As an example, each PDSCH-to-HARQ_feedback timing specifies a slot offset k1 from the slot of the heading PDSCH in each corresponding group to the HARQ feedback timing. As a specific example, in FIG. 16, two PDSCH-to-HARQ_feedback timings are included in the DCI for scheduling the four PDSCHs, and grouping is performed into a group of PDSCHs #0, #1, and #2 and a group of PDSCH #3. The first PDSCH-to-HARQ_feedback timing specifies a slot offset k1 from PDSCH #0 which is the heading PDSCH of the first group to the HARQ feedback timing. In the example of FIG. 16, a case of after four slots is illustrated. The second PDSCH-to-HARQ_feedback timing specifies a slot offset k1 from PDSCH #3 which is the heading PDSCH of the second group to the HARQ feedback timing. In the example of FIG. 16, a case of after two slots is illustrated.

(2) The feedback timing of each HARQ-ACK is specified by one PDSCH-to-HARQ_feedback timing (feedback timing information) included in one piece of DCI and slot offset information specified by the RRC configuration. As a specific example, in FIG. 16, the first HARQ feedback timing is specified in a fifth slot by the PDSCH-to-HARQ_feedback timing, and the second HARQ feedback timing is further specified by the slot offset information specified by the RRC configuration as after one slot.

As a result, the DCI overhead regarding the HARQ-ACK feedback timing does not increase even as compared with the single-slot PDSCH scheduling. The offset information is set by RRC or by default. In addition, the number of HARQ-ACK feedback timings is desirably set by RRC.

Note that, in Example 3, it is not presumed that each PDSCH-to-HARQ_feedback timing be specified prior to the processing time for preparing HARQ-ACK of a corresponding PDSCH (processing time for preparing HARQ-ACK #3).

In the terminal device 40, it is not presumed that corresponding HARQ-ACK feedback timing be specified prior to the processing time for preparing HARQ-ACK in each of scheduled PDSCHs. In other words, in the terminal device 40, it is presumed that corresponding HARQ-ACK feedback timing be specified after the processing time for preparing HARQ-ACK in each of scheduled PDSCHs.

<3-1-2. Notification Method of Slots for which PDSCH Is Scheduled>

(1) Dynamic Indication by DCI

(1-1) Notification by Value of TDRA

A slot in which PDSCH is scheduled is notified by TDRA values, for example, values of start and length indicator value (SLIV) (an example of SLIV information) that specify a start symbol and a symbol length of PDSCH. As one specific example, in a case where symbols of a plurality of consecutive slots are specified by SLIV values, PDSCH is scheduled in the plurality of consecutive slots. The SLIV values are one example of the SLIV information. As another specific example, the number of the plurality of consecutive slots is notified by the number of valid SLIVs. A valid SLIV refers to an SLIV both values of a start symbol S and a symbol length L specified by values of which are valid values.

(1-2) Notification by Field Indicating the Number of Slots

A new field indicating the number of slots notifies slots in which PDSCH is scheduled. Specifically, PDSCHs are scheduled in consecutive slots counted from a slot specified by PDCCH and a values k0 of the slot offset of PDSCHs, which is one parameter of time domain resource allocation (TDRA) values, the number of the consecutive slots specified by the new field. Note that, in this case, it is desirable that the same SLIV values are applied in all the specified slots. The TDRA values are one example of TDRA information.

(1-3) Notification by Bitmap Information Indicating Slots in Which PDSCH Is Scheduled

Bitmap information included in DCI specifies slots in which PDSCH is scheduled. Each bit in the bitmap corresponds to a slot. The value of each bit in the bitmap specifies whether or not to schedule PDSCH in a corresponding slot.

(1-4) Slot Specified by SFI

PDSCH is scheduled in a slot specified by a slot format indicator (SFI). Examples of the slot specified by an SFI include a downlink slot specified as a PDSCH slot or a downlink slot not specified as a PDCCH monitoring slot. In addition, as another example of the slot specified by an SFI, there is a slot specified as a downlink slot.

(2) Semi-Static Indication by RRC Configuration

(2-1) The number of slots in which PDSCH is scheduled is specified by an RRC parameter.
The number of slots in which PDSCH is scheduled is specified for each serving cell, each BWP, each CORESET, each search space, or for each DCI by the RRC parameter. PDSCH is scheduled in consecutive slots, the number of which specified by the RRC parameter, counted from a slot in which a downlink grant is detected.
(2-2) The number of slots in which PDSCH is scheduled is the same as all downlink slots included in a PDCCH monitoring period.
The PDCCH monitoring period is set by an RRC parameter. The slots in which PDSCH is scheduled are all slots between a PDCCH monitoring slot and a next PDCCH monitoring slot. PDSCH is scheduled in consecutive slots from the slot in which the downlink grant is detected in the PDCCH monitoring slot to a slot preceding the next PDCCH monitoring slot.

<3-1-3. Notification Method of HARQ Process ID>

(1) A HARQ process ID (HARQ process ID) of a heading PDSCH is notified by DCI. IDs subsequent to the notified HARQ process ID are sequentially assigned as HARQ process IDs of subsequent PDSCHs.

```
Exemplary Equation: HARQ process ID for PDSCH #X = mod
(indicated HARQ process ID - 1 + #X, the maximum number of
HARQ processes) + indicated HARQ process ID
```

Where mod( , ) denotes a modulo function, PDSCH #X denotes an Xth PDSCH counted from the head of scheduled PDSCHs, indicated HARQ process ID denotes a HARQ process ID specified by DCI, and the maximum number of HARQ processes denotes the maximum number of HARQ processes.

(2) HARQ process IDs of all the PDSCHs are independently notified by a plurality of HARQ process ID fields included in the DCI.

Note that, in the present method, different HARQ process IDs can be specified for a plurality of PDSCHs (multi-slot PDSCH scheduling), or the same HARQ process ID can be specified (multi-slot PDSCH repetition). That is, it is easy to dynamically switch between multi-slot PDSCH scheduling and multi-slot PDSCH repetition.

<3-1-4. Notification Method of NDI>

(1) An NDI corresponding to each HARQ process is independently notified by a plurality of New Data Indicator (NDI) fields included in one piece of DCI. An NDI bitmap corresponding to NDIs of respective HARQ process IDs is included in the DCI. The number of NDIs included in one piece of DCI corresponds to the number of corresponding HARQ process IDs.

(2) One NDI field included in one piece of DCI notifies the NDIs to all HARQ processes in a shared manner.

(3) An NDI corresponding to each PDSCH is independently notified by a plurality of New Data Indicator (NDI) fields included in one piece of DCI. An NDI bitmap corresponding to NDIs of respective HARQ process IDs is included in the DCI. The number of NDIs included in one piece of DCI corresponds to the number of corresponding PDSCHs.

<3-1-5. Notification Method of RV>

(1) Redundancy Version (RV) corresponding to each HARQ process is independently notified by a plurality of RV fields included in one piece of DCI. In addition, an RV bitmap corresponding to an RV of each HARQ process ID is included in the DCI. The number of RVs included in one piece of DCI corresponds to the number of corresponding HARQ process IDs.

(2) One RV field included in one piece of DCI notifies the RVs to all HARQ processes in a shared manner.

(3) Redundancy Version (RV) corresponding to each PDSCH is independently notified by a plurality of RV fields included in one piece of DCI. In addition, an RV bitmap corresponding to an RV of each PDSCH is included in the DCI. The number of RVs included in one piece of DCI corresponds to the number of corresponding PDSCHs.

(4) One RV field and RV pattern included in one piece of DCI notifies an RV corresponding to each PDSCH. An RV pattern is set by RRC signaling in a pattern such as {0, 2, 3, 1}, {0, 3, 0, 3}, or {0, 0, 0, 0}. As an example, one of the above three patterns is specified by the RV field. As another example, one of the above three patterns is preset by RRC signaling, and a start RV in the pattern is specified by the RV field.

Note that one RV field may consist of two bits or one bit. In a case of two-bit configuration, the one RV field specifies any RVs of {0, 1, 2, 3}. In a case of one-bit configuration, the one RV field specifies either one RV out of two values (for example, {0, 2}) from {0, 1, 2, 3}.

<3-1-6. MCS Notification Method>

(1) MCS corresponding to each HARQ process is independently notified by a plurality of MCS fields included in one piece of DCI. In addition, an MCS bitmap corresponding to an MCS of each HARQ process ID is included in the DCI. The number of MCSs in one piece of DCI corresponds to the number of corresponding HARQ process IDs.

(2) One MCS field included in one piece of DCI notifies the MCSs to all HARQ processes in a shared manner.

(3) MCS corresponding to each PDSCH is independently notified by a plurality of MCS fields included in one piece of DCI. In addition, an MCS bitmap corresponding to an MCS of each PDSCH is included in the DCI. The number of MCSs in one piece of DCI corresponds to the number of corresponding HARQ process IDs.

<3-1-7. Switching Between Multi-Slot PDSCH Scheduling and Single-Slot PDSCH Scheduling>

It is possible to switch between multi-slot PDSCH scheduling and single-slot PDSCH scheduling. As a case where switching is necessary, for example, in a case where PDSCHs are scheduled in multi-slot in first transmission and reception of some of the PDSCHs succeeds whereas reception of the rest of the PDSCHs fails, in a case where retransmission is instructed only for the PDSCHs of which reception has failed, the number of slots to be scheduled (for example, switching between multi-slot scheduling and single-slot scheduling) can be dynamically modified. As a result, the frequency utilization efficiency is improved.

(1) Switching by Value of TDRA

In the configuration of TDRA set up to sixteen patterns, for example, whether it is multi-slot or single-slot is recognized depending on whether or not a plurality of slots is specified. As an example, the terminal device 40 recognizes that it is multi-slot PDSCH scheduling in a case where the length of PDSCH is the value of SLIV specified across slots, whereas it is recognized as single-slot PDSCH scheduling in a case where the length of PDSCH is the value of SLIV specified so as to fall within a slot. As another example, the terminal device 40 recognizes that it is multi-slot PDSCH scheduling in a case where there is a plurality of valid SLIVs, whereas it is recognized as single-slot PDSCH scheduling in a case where there is one valid SLIV. As another example, the terminal device 40 recognizes that it is multi-slot PDSCH scheduling in a case where the number of slots specified by the TDRA is greater than one, whereas it is recognized as single-slot PDSCH scheduling in a case where the number of slots specified by the TDRA is one.

(2) Switching by Type of DCI

It is recognized whether it is single-slot or multi-slot depending on a difference of the DCI format. As an example, a DCI format for performing multi-slot PDSCH scheduling is non-fallback DCI (e.g. DCI format 1_1) in which multi-slot PDSCH scheduling is configured by RRC signaling. As a specific example, the terminal device 40 recognizes that it is single-slot PDSCH scheduling when fallback DCI (e.g. DCI format 1_0) is detected and recognizes that it is multi-slot PDSCH scheduling when non-fallback DCI (e.g. DCI format 1_1) is detected.

Furthermore, as another example, a DCI format for performing multi-slot PDSCH scheduling is a new DCI format (e.g. DCI format 1_3). The terminal device 40 monitors DCI format 1_0, DCI format 1_1, DCI format 1_2, and/or DCI format 1_3. When a conventional DCI format (e.g. DCI format 1_0, DCI format 1_1, or DCI format 1_2) is detected, it is recognized as single-slot PDSCH scheduling, and when a new DCI format (e.g. DCI format 1_3) is detected, it is recognized as multi-slot PDSCH scheduling.

(3) Switching by Search Space

Depending on a difference in the search space in which PDCCH is placed, whether it is single-slot or multi-slot is recognized. As an example, when PDCCH of a downlink grant placed in a predetermined search space (e.g. USS) is detected, the terminal device 40 recognizes that it is multi-slot PDSCH scheduling, and when PDCCH of a downlink grant placed in another predetermined search space (e.g. CSS) is detected, the terminal device 40 recognizes that it is single-slot PDSCH scheduling.

(4) Switching by RNTI

From a difference in the RNTI scrambled with the CRC of the PDCCH, whether it is single-slot or multi-slot is recognized. As an example, the terminal device 40 recognizes that it is multi-slot PDSCH scheduling when PDCCH of a predetermined RNTI is detected and recognizes that it is single-slot PDSCH scheduling when PDCCH of another predetermined RNTI is detected.

<3-1-8. DAI>

DCI of multi-slot PDSCH scheduling includes DAI information (C-DAI (Counter DAI) and/or T-DAI (Total DAI)) for one PDSCH. As an example, the DAI specifies DAI information of PDSCH in the last slot. As another example, the DAI specifies DAI information of PDSCH of the heading slot.

<3-1-9. PUCCH Resource>

(1) Case where one PRI is included in DCI

The DCI of multi-slot PDSCH scheduling includes a field for specifying one PUCCH resource (PUCCH resource indication, PRI).

(1-1) Case where one PDSCH-to-HARQ_feedback timing is specified

As an example, one PUCCH resource corresponding to one PDSCH-to-HARQ_feedback timing is specified. A time and frequency resource of PUCCH is specified from one PDSCH-to-HARQ_feedback timing and one PRI.

(1-2) Case where two or more PDSCH-to-HARQ_feedback timings are specified

As an example, the same PUCCH resource index is specified for all PDSCH-to-HARQ_feedback timings. A time and frequency resource of each PUCCH is specified from each PDSCH-to-HARQ_feedback timing and one PRI.
As another example, for a first PUCCH, a time and frequency resource is specified from first PDSCH-to-HARQ_feedback timing and one PRI, and for subsequent PUCCHs, a time and frequency resource is specified from subsequent PDSCH-to-HARQ_feedback timings and PRIs and PRI offsets. A PRI offset is an offset index of a PUCCH resource indication and is specified by an RRC parameter.

(2) Case where a plurality of PRIs is included in DCI

As an example, in a case where PDSCH-to-HARQ_feedback timing and a PRI are associated to each other on a one-to-one basis, a time and frequency resource of PUCCH is specified from each PDSCH-to-HARQ_feedback timing and each PRI.

(3) Case where combination information of PDSCH-to-HARQ_feedback timing and PRI is included in DCI

As an example, a table specifying a combination of the PDSCH-to-HARQ_feedback timing and the PRI is defined. PDSCH-to-HARQ_feedback timing and PRI information are obtained from an index of the table, and a time and frequency resource of PUCCH is specified from these pieces of information.

<3-1-10 Frequency Axis Resource Allocation>

(1) Case where one frequency axis resource allocation is included in DCI

Information of one frequency axis resource allocation (FDRA) included in one piece of DCI is applied to all PDSCHs scheduled by the DCI. That is, a plurality of PDSCHs is transmitted using a common resource block.

(2) In a case where a plurality of frequency axis resource allocations is included in DCI

Information of a plurality of frequency axis resource allocations (FDRAs) included in one piece of DCI is applied to each of a plurality of PDSCHs scheduled by the DCI.
That is, each of the PDSCHs is transmitted using a resource block specified by information of a corresponding frequency axis resource allocation (FDRA).

<3-1-11. Priority Indicator>

As an example, one piece of DCI includes a plurality of priority indicators. The plurality of priority indicators specify the priorities for the corresponding plurality of PDSCHs. A priority indicator is configured as a bitmap.
As an example, one piece of DCI includes one priority indicator. A plurality of PDSCHs scheduled by one piece of DCI has the same priority specified by one priority indicator.

<3-1-12. Summary of First Example>

As described above, according to the first example, the base station device 20 (or a relay device 30 which is a type of base station devices 20) transmits one piece of DCI for scheduling a plurality of PDSCHs having different HARQ process IDs to the terminal device 40. The terminal device 40 receives the DCI transmitted from the base station device 20 and feeds back a plurality of HARQ-ACKs corresponding to the respective PDSCHs scheduled by the DCI to the base station device 20 at the same feedback timing or a plurality of different feedback timings. The base station device 20 receives, from the terminal device 40, the HARQ-ACKs fed back from the terminal device 40 at the same feedback timing or the plurality of different feedback timings. In this manner, it is made possible to set a slot for which PDCCH is not monitored and to schedule PDSCH from one slot for which PDCCH is monitored to a plurality of slots for which PDCCH is not monitored, and thus, it is possible to maintain a PDSCH peak rate while the PDCCH monitoring frequency is reduced. Therefore, it is possible to suppress the power consumption of the terminal device 40 and also to normally schedule PDCCHs, and thus it is possible to reduce the power consumption of the terminal device 40 and to suppress the coverage reduction.

<3-2. Second Example: multi-slot PDSCH scheduling by multiple pieces of DCI>

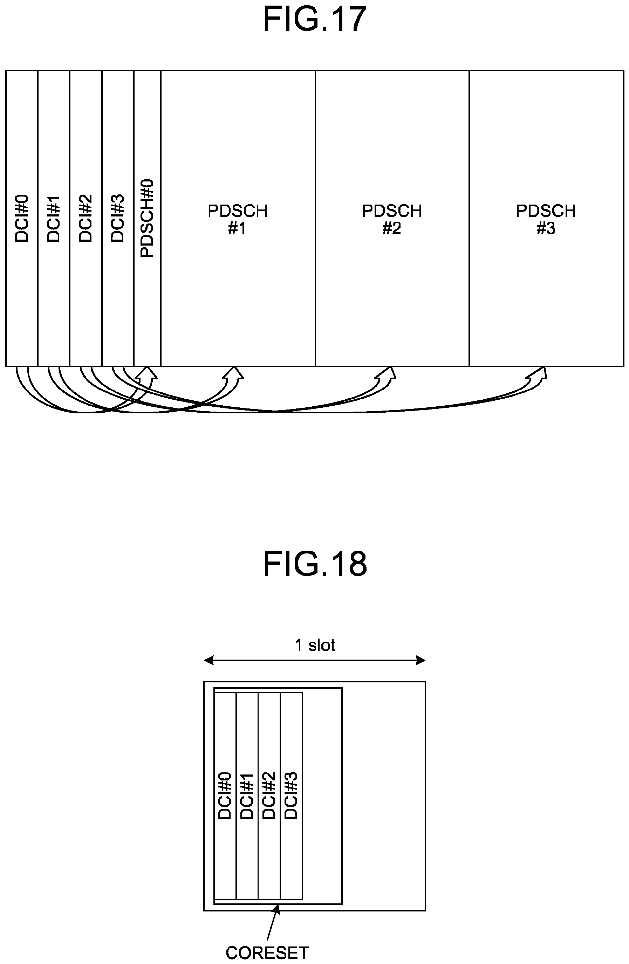

As illustrated in FIG. 17, the base station device 20 schedules a plurality of PDSCHs having different HARQ process IDs with a plurality of pieces of DCI within a slot. As a result, scheduling of a plurality of PDSCHs with one piece of DCI enables flexible PDSCH scheduling.

However, it is necessary to set a space in which a plurality pieces of DCI can be allocated in one slot. Specifically, in a case where the current CORESET configuration is 45 RBs group (270 RBs) and three symbols, which is the maximum configuration, a maximum of 135 CCEs can be configured, and a maximum of eight aggregation level 16 PDCCHs can be accommodated. On the other hand, for example, in a case where scheduling of eight slots is performed by one CORESET, only one UE can be multiplexed. For bandwidths smaller than 270 RBs, the number of CCEs is smaller.

<3-2-1. Method for Extending One CORESET>

[Example 1] One CORESET is extended. Specifically, as illustrated in FIG. 18, one CORESET includes four or more symbols. That is, it is possible to allocate four or more pieces of DCI in one CORESET in one slot. However, up to Rel-16, the number of symbols of one CORESET is up to three. Therefore, specification changes in a case of setting four or more symbols will be described below.

(DMRS Position in PDSCH Mapping Type A)

(1) The DMRS position is placed in a symbol immediately after CORESET. For example, in a case where CORESET includes seven symbols, DMRS of PDSCH is placed at an eighth symbol.
(2) The DMRS position is placed in a predetermined symbol after four symbols. For example, in a case where CORESET includes seven symbols, a DMRS of PDSCH is placed at a tenth symbol.
(3) In a case where it is set to four or more symbols, PDSCH allocation based on PDSCH mapping type A is not applied. In this case, in a case where PDSCH is allocated in the same slot as that of the CORESET, only PDSCH mapping type B is applied. Note that PDSCH mapping types A and B can be switched depending on a slot in which PDSCH is scheduled.

<3-2-2. Method for Allocating Multiple CORESETs in One Slot>

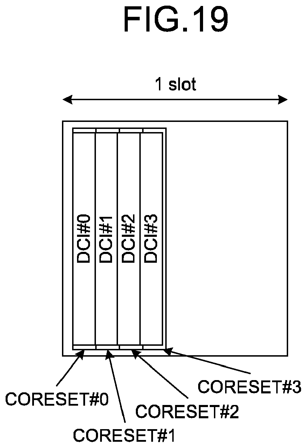

[Example 2] As illustrated in FIG. 19, a plurality of CORESETs is allocated in one slot. Specifically, six or more CORESETs are allocated in one slot. Up to Rel-15, up to three CORESETs can be allocated in one slot in one BWP. In Rel-16, up to five CORESETs can be allocated in one slot in one BWP. Therefore, specification changes in a case of setting six or more CORESETs will be described below.

<3-2-3. Cross-Slot Scheduling>

Cross-slot scheduling of scheduling PDSCHs in slots different from a slot in which PDCCH is transmitted can be implemented by the PDCCH and the value k0 of the slot offset of the PDSCHs to be scheduled. The value (offset value) k0 of slot offset is an example of the slot offset information.

Conventionally, it is possible to configure, for each downlink bandwidth part (DL BWP), a maximum of sixteen patterns of combinations of the value k0 of the slot offset, the PDSCH mapping type, and the start symbol and the symbol length (starting and length indicator value (SLIV)) of PDSCHs by PDSCH-TimeDomainResourceAllocation (TDRA). In a case where many PDSCHs are scheduled by cross-slot scheduling, sixteen patterns may not be sufficient. Extension is required in a case where sixteen or more patterns are configured, and thus a proposed extension will be described.

(Proposed Extension)

(1) PDCCH and the value k0 of a slot offset of PDSCHs to be scheduled are set by independent RRC parameters for each CORESET or each search space. As an example, different configurations of time domain resource allocation are applied to PDCCHs between different CORESETs. As an example, different configurations of time domain resource allocation are applied to PDCCHs between different search spaces.

(2) The value k0 of a slot offset is set in correspondence to the start symbol of CORESET. As a specific example, k0 is set so that a CORESET allocated previously specifies a previous slot, and k0 is set so that a COREST allocated subsequently specifies a subsequent slot.

For example, k0 of PDCCH of CORESET allocated in a first symbol is 0 (PDSCH scheduling to the same slot), k0 of PDCCH of CORESET allocated in a fourth symbol is 1 (PDSCH scheduling to a subsequent slot), k0 of PDCCH of CORESET allocated in a seventh symbol is 2 (PDSCH scheduling to a slot two slots after), and k0 of PDCCH of CORESET allocated in a tenth symbol is 3 (PDSCH scheduling to a slot three slots later). In this manner, k0 of PDCCH of each CORESET is set for that CORESET.

<3-2-4. Summary of Second Example>

As described above, according to the second example, the base station device 20 (or a relay device 30 which is a type of base station devices 20) transmits, to the terminal device 40, a plurality of pieces of DCI for scheduling a plurality of PDSCHs having different HARQ process IDs, the plurality of pieces of DCI allocated in one CORESET in one slot. The terminal device 40 receives each DCI transmitted from the base station device 20 and feeds back a plurality of HARQ-ACKs corresponding to the respective PDSCHs scheduled by the DCI to the base station device 20. The base station device 20 receives each of the HARQ-ACKs fed back from the terminal device 40. In this manner, it is made possible to set a slot for which PDCCH is not monitored and to schedule PDSCH from one slot for which PDCCH is monitored to a plurality of slots for which PDCCH is not monitored, and thus, it is possible to maintain a PDSCH peak rate while the PDCCH monitoring frequency is reduced. Therefore, it is possible to suppress the power consumption of the terminal device 40 and also to normally schedule PDCCHs, and thus it is possible to reduce the power consumption of the terminal device 40 and to suppress the coverage reduction.

<3-3. Third Example: multi-cell scheduling by one DCI>

The first example described above can be similarly applied to a plurality of PDSCH/PUSCH schedulings (multi-cell PDSCH/PUSCH scheduling) performed for a plurality of serving cells by one piece of DCI. Only examples specific to multi-cell scheduling are described below. The first example described above applies where not mentioned.

<3-3-1. Carrier Indicator>

In multi-cell scheduling, information of a carrier indicator specifying a plurality of serving cells (PCell or SCell) is included.

Examples of the carrier indicator in multi-cell scheduling include bitmap information corresponding to serving cells (PCell or SCell), in which each bit is activated, included in a downlink grant (e.g. DCI format 1_x) or an uplink grant (e.g. DCI format 0_x). As a specific example, in a case where five serving cells are configured in the terminal device 40 as carrier aggregation, the bitmap information is 5-bit information corresponding to each serving cell. PDSCH by the downlink grant or PUSCH by the uplink grant is scheduled in a serving cell specified by the bitmap information included in the downlink grant or the uplink grant.

Examples of the carrier indicator in multi-cell scheduling include bitmap information, in which each bit corresponds to a serving cell (PCell or SCell), included in an SFI (DCI format 2_0). The terminal device 40 receives both the SFI and the downlink grant or the uplink grant. PDSCH by the downlink grant or PUSCH by the uplink grant is scheduled in a serving cell specified by the bitmap information included in the SFI.

Note that no notification is made to a deactivated serving cell. Multi-cell scheduling is not expected for a deactivated serving.

Multi-cell PDSCH scheduling by one piece of DCI can reduce the overhead of the control information. In addition, since it is not necessary to perform PDCCH monitoring in each serving cell, it is also possible to suppress the power consumption.

<3-3-2. T-DAI>

As an example, T-DAI in multi-cell scheduling is not notified.

As an example, T-DAI in multi-cell scheduling indicates a value of T-DAI for a serving cell having the highest index value among serving cells that are scheduled.

<4. Others>

At the same time as introducing multi-slot PDSCH scheduling, the periodicity of the maximum number for monitoring PDCCH needs to be changed. Specifically, the unit is changed from slots to absolute time. As an example, it is defined by a predetermined absolute time. For example, it is defined by a subframe (1 msec), a half-frame (5 msec), or a radio frame (10 msec).

In addition, as an example, it is defined by a time specified by RRC signaling. As a specific example, where $\mu$ is greater than or equal to 4, the maximum number of monitored PDCCH candidates per certain duration and per serving cell is 20, and the maximum number of non-overlapped CCEs per certain duration and per serving cell is 32. Note that the certain duration is a slot interval where $\mu = 3$.

(Slot Configuration)

In this configuration, a PDCCH slot may be defined. No PDSCH is allocated in a PDCCH slot. A PDCCH slot may be configured by an SIB, dedicated RRC signaling, or a common PDCCH.

A PDSCH slot may also be defined. No PDCCH is allocated in a PDSCH slot. A PDSCH slot may be configured by an SIB, dedicated RRC signaling, or a common PDCCH.

(DMRS Configuration of PDCCH)

With high SCS, the subcarriers spread in a wide area, and thus there is a possibility that the channel estimation accuracy in the frequency axis is deteriorated in the current configuration in which the subcarriers are allocated every four REs (resource blocks). On the other hand, since the symbol length is short in the high SCS, there is a possibility that the complementation accuracy in the time axis is sufficiently secured.

Therefore, as a solution, a DMRS configuration (second DMRS configuration) that increases the density of DMRSs on the frequency axis and decreases the density of DMRSs on the time axis can be applied. It is desirable that a DMRS of PDCCH is included in at least a first symbol from the viewpoint of a delay in demodulation processing.

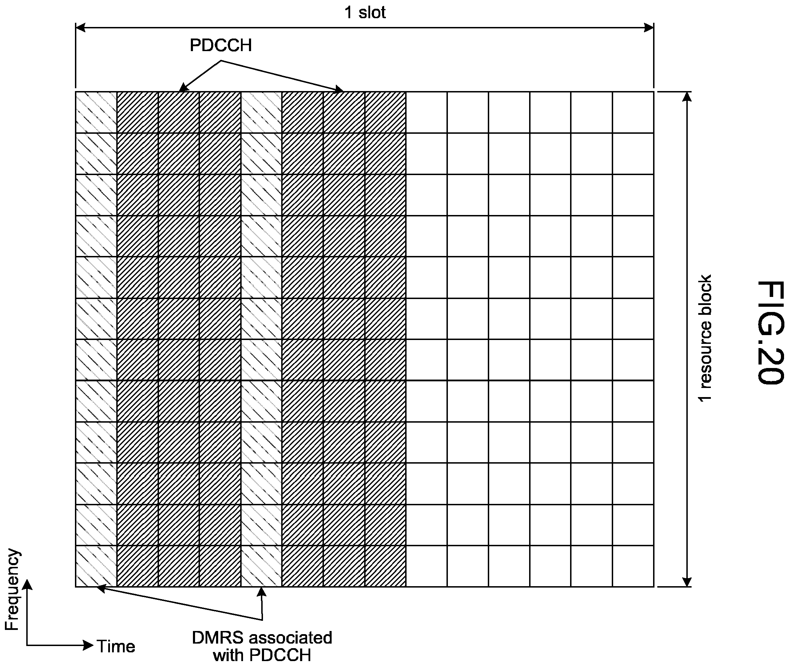

As a specific example, as illustrated in FIG. 20, only a DMRS of PDCCH is allocated in a first symbol, and PDCCHs are allocated in second, third, and fourth symbols. Note that the number of symbols in which DMRSs are allocated and the number of DMRS symbols can be specified by RRC configuration.

As another specific example, a DMRS is allocated every two subcarriers and every two symbols. The density of DMRSs on the frequency axis and/or the density of DMRSs on the time axis may be set by RRC signaling.

Application of the DMRS configuration is switched depending on the conditions.

Examples of the conditions include a frequency range. For example, in the first frequency range, the second frequency range, or the third frequency range, the first DMRS configuration is applied, and the second DMRS configuration is applied in a fourth frequency range.

Examples of the conditions include SCS. For example, in a case where the SCS is specified as less than or equal to 120 kHz, the first DMRS configuration is applied, and in a case where the SCS is specified as greater than or equal to 240 kHz, the second DMRS configuration is applied.

Examples of the conditions include indication by RRC. In a case where application of the second DMRS configuration is set by RRC, the second DMRS configuration is applied; otherwise, the first DMRS configuration is applied. The above RRC configuration may be set for each cell, for each bandwidth part (BWP), for each CORESET, or for each search space.

Examples of the conditions include indication by system information. In a case where application of the second DMRS configuration is specified by an indicator included in a Master Information Block (MIB) or a System Information Block (SIB), the second DMRS configuration is applied; otherwise, the first DMRS configuration is applied. Note that indication by the system information may be overwritten by dedicated RRC configuration to be set later.

Although the embodiments have been described in detail by referring to the accompanying drawings, the present technology is not limited to such examples. The embodiments may be implemented in combination. It is obvious that a person having ordinary knowledge in the technical field of the present disclosure can conceive various modifications or variations within the scope of the technical idea described in the claims, and it is naturally understood that these also belong to the technical scope of the present disclosure.

For example, it is also possible to create a computer program for causing hardware such as a CPU, a ROM, and a RAM incorporated in a base station device 20, a relay device 30, a terminal device 40, and others to exert functions of the base station device 20, the relay device 30, the terminal device 40, and others. Furthermore, a computer-readable storage medium storing the computer program is also provided.

Note that the above effects are not necessarily limited, and any of the effects described herein or other effects that can be grasped from the present specification may be achieved together with or instead of the above effects.

Note that the present technology can also have the following configurations.

(1) A communication method, including the steps of:

transmitting one piece of downlink control information for scheduling a plurality of PDSCHs having different HARQ process identification information to a terminal device; and
receiving, from the terminal device, a plurality of HARQ-ACKs corresponding to the plurality of PDSCHs scheduled by the downlink control information, the plurality of HARQ-ACKs fed back at the same feedback timing or a plurality of different feedback timings,
in which the feedback timings are selected in accordance with a predetermined condition.

(2) A communication method, including the steps of:

receiving, from a base station device, one piece of downlink control information for scheduling a plurality of PDSCHs having different HARQ process identification information; and
feeding back a plurality of HARQ-ACKs corresponding to the plurality of PDSCHs scheduled by the downlink control information to the base station device at the same feedback timing or a plurality of different feedback timings,
in which the feedback timings are selected in accordance with a predetermined condition.

(3) The communication method according to (1),
in which the feedback timings are specified after processing time for preparing the plurality of HARQ-ACKs in the plurality of PDSCHs scheduled by the downlink control information.
(4) The communication method according to (2),
in which it is based on a premise that the feedback timings are specified after processing time for preparing the plurality of HARQ-ACKs in the plurality of PDSCHs scheduled by the downlink control information.
(5) The communication method according to (2),
wherein, in a case where the HARQ-ACKs cannot be returned to the base station device, the HARQ-ACKs that cannot be returned are regarded as indication information specifying that the feedback timings are not specified.
(6) The communication method according to (1) or (2),
in which the plurality of different feedback timings is specified by a field specifying the plurality of feedback timings included in the downlink control information.
(7) The communication method according to (1) or (2),
in which the plurality of different feedback timings is specified by one piece of feedback timing information and slot offset information included in the downlink control information.
(8) The communication method according to (1), further including the step of:
transmitting, to the terminal device, TDRA information for notifying slots in which the PDSCHs are scheduled.
(9) The communication method according to (2), further including the step of:
receiving, from the base station device, TDRA information for notifying slots in which the PDSCHs are scheduled.
(10) The communication method according to (1), further including the step of:
transmitting, to the terminal device, SLIV information for notifying slots in which the PDSCHs are scheduled, the SLIV information specifying a start symbol and a symbol length of the PDSCHs.
(11) The communication method according to (2), further including the step of:
receiving, from the base station device, SLIV information for notifying slots in which the PDSCHs are scheduled, the SLIV information specifying a start symbol and a symbol length of the PDSCHs.
(12) The communication method according to (2), further including the step of:
switching between a multi-slot PDSCH schedule for scheduling a plurality of PDSCHs having different HARQ process identification information by one piece of downlink control information and a single-slot PDSCH schedule for scheduling one PDSCH by one piece of downlink control information.
(13) The communication method according to (12),
in which the multi-slot PDSCH schedule and the single-slot PDSCH schedule are switched on a basis of TDRA information.
(14) A communication method, including the steps of:

transmitting, to a terminal device, a plurality of pieces of downlink control information for scheduling a plurality of PDSCHs having different HARQ process identification information, the plurality of pieces of downlink control information allocated in one CORESET in one slot; and
receiving, from the terminal device, a plurality of HARQ-ACKs corresponding to the plurality of PDSCHs scheduled by the plurality of pieces of downlink control information.

(15) A communication method, including the steps of:

receiving, from a base station device, a plurality of pieces of downlink control information for scheduling a plurality of PDSCHs having different HARQ process identification information, the plurality of pieces of downlink control information allocated in one CORESET in one slot; and
feeding back, to the base station device, a plurality of HARQ-ACKs corresponding to the plurality of PDSCHs scheduled by the plurality of pieces of downlink control information.

(16) The communication method according to (14) or (15),

in which the CORESET comprises four or more symbols, and
a position of a DMRS associated with a PDCCH is located in a symbol immediately after the CORESET.

(17) The communication method according to (14) or (15),

in which the CORESET comprises four or more symbols, and
a position of a DMRS associated with a PDCCH is located in a predetermined symbol after four symbols.

(18) The communication method according to (14) or (15),

in which the CORESET comprises four or more symbols, and
PDSCH mapping type A and PDSCH mapping type B are switched depending on a slot in which the PDSCH is scheduled.

(19) The communication method according to any one of (14) to (18),

in which cross-slot scheduling of scheduling the PDSCHs in slots different from a slot in which the PDCCH is transmitted is implemented by the PDCCH and slot offset information of the PDSCHs to be scheduled, and
the PDCCH and the slot offset information are set by independent RRC parameters for each CORESET or each search space.

(20) The communication method according to any one of (14) to (18),

in which cross-slot scheduling of scheduling the PDSCHs in slots different from a slot in which the PDCCH is transmitted is implemented by the PDCCH and slot offset information of the PDSCHs to be scheduled, and
the slot offset information is set in correspondence with a start symbol of the CORESET.

Reference Signs List

1    COMMUNICATION SYSTEM

10    MANAGEMENT DEVICE
20    BASE STATION DEVICE
23    CONTROL UNIT
30    RELAY DEVICE
34    CONTROL UNIT
40    TERMINAL DEVICE
45    CONTROL UNIT

**Claims**

1. A communication method, comprising the steps of:

transmitting one piece of downlink control information for scheduling a plurality of PDSCHs having different HARQ process identification information to a terminal device; and

receiving, from the terminal device, a plurality of HARQ-ACKs corresponding to the plurality of PDSCHs scheduled by the downlink control information, the plurality of HARQ-ACKs fed back at a same feedback timing or a plurality of different feedback timings,

wherein the feedback timings are selected in accordance with a predetermined condition.

2. A communication method, comprising the steps of:

receiving, from a base station device, one piece of downlink control information for scheduling a plurality of PDSCHs having different HARQ process identification information; and

feeding back a plurality of HARQ-ACKs corresponding to the plurality of PDSCHs scheduled by the downlink control information to the base station device at a same feedback timing or a plurality of different feedback timings,

wherein the feedback timings are selected in accordance with a predetermined condition.

3. The communication method according to claim 1,
wherein the feedback timings are specified after processing time for preparing the plurality of HARQ-ACKs in the plurality of PDSCHs scheduled by the downlink control information.

4. The communication method according to claim 2,
wherein it is based on a premise that the feedback timings are specified after processing time for preparing the plurality of HARQ-ACKs in the plurality of PDSCHs scheduled by the downlink control information.

5. The communication method according to claim 2,
wherein, in a case where the HARQ-ACKs cannot be returned to the base station device, the HARQ-ACKs that cannot be returned are regarded as indication information specifying that the feedback timings are not specified.

6. The communication method according to claim 1,
wherein the plurality of different feedback timings is specified by a field specifying the plurality of feedback timings included in the downlink control information.

7. The communication method according to claim 1,
wherein the plurality of different feedback timings is specified by one piece of feedback timing information and slot offset information included in the downlink control information.

8. The communication method according to claim 1, further comprising the step of:
transmitting, to the terminal device, TDRA information for notifying slots in which the PDSCHs are scheduled.

9. The communication method according to claim 2, further comprising the step of:
receiving, from the base station device, TDRA information for notifying slots in which the PDSCHs are scheduled.

10. The communication method according to claim 1, further comprising the step of:
transmitting, to the terminal device, SLIV information for notifying slots in which the PDSCHs are scheduled, the SLIV information specifying a start symbol and a symbol length of the PDSCHs.

11. The communication method according to claim 2, further comprising the step of:
receiving, from the base station device, SLIV information for notifying slots in which the PDSCHs are scheduled, the SLIV information specifying a start symbol and a symbol length of the PDSCHs.

12. The communication method according to claim 2, further comprising the step of:
switching between a multi-slot PDSCH schedule for scheduling a plurality of PDSCHs having different HARQ process identification information by one piece of downlink control information and a single-slot PDSCH schedule for scheduling one PDSCH by one piece of downlink control information.

13. The communication method according to claim 12,
wherein the multi-slot PDSCH schedule and the single-slot PDSCH schedule are switched on a basis of TDRA information.

**14.** A communication method, comprising the steps of:

transmitting, to a terminal device, a plurality of pieces of downlink control information for scheduling a plurality of PDSCHs having different HARQ process identification information, the plurality of pieces of downlink control information allocated in one CORESET in one slot; and
receiving, from the terminal device, a plurality of HARQ-ACKs corresponding to the plurality of PDSCHs scheduled by the plurality of pieces of downlink control information.

**15.** A communication method, comprising the steps of:

receiving, from a base station device, a plurality of pieces of downlink control information for scheduling a plurality of PDSCHs having different HARQ process identification information, the plurality of pieces of downlink control information allocated in one CORESET in one slot; and
feeding back, to the base station device, a plurality of HARQ-ACKs corresponding to the plurality of PDSCHs scheduled by the plurality of pieces of downlink control information.

**16.** The communication method according to claim 14,

wherein the CORESET comprises four or more symbols, and
a position of a DMRS associated with a PDCCH is located in a symbol immediately after the CORESET.

**17.** The communication method according to claim 14,

wherein the CORESET comprises four or more symbols, and
a position of a DMRS associated with a PDCCH is located in a predetermined symbol after four symbols.

**18.** The communication method according to claim 14,

wherein the CORESET comprises four or more symbols, and
PDSCH mapping type A and PDSCH mapping type B are switched depending on a slot in which the PDSCH is scheduled.

**19.** The communication method according to claim 14,

wherein cross-slot scheduling of scheduling the PDSCHs in slots different from a slot in which the PDCCH is transmitted is implemented by the PDCCH and slot offset information of the PDSCHs to be scheduled, and
the PDCCH and the slot offset information are set by independent RRC parameters for each CORESET or each search space.

**20.** The communication method according to claim 14,

wherein cross-slot scheduling of scheduling the PDSCHs in slots different from a slot in which the PDCCH is transmitted is implemented by the PDCCH and slot offset information of the PDSCHs to be scheduled, and
the slot offset information is set in correspondence with a start symbol of the CORESET.

FIG.1

EP 4 195 822 A1

# FIG.2

1

CN

$10_1$
MANAGEMENT DEVICE

$10_2$
MANAGEMENT DEVICE

...

RAN

$20_1$
BASE STATION DEVICE

$20_2$
BASE STATION DEVICE

$20_3$
BASE STATION DEVICE

...

$30_1$
RELAY DEVICE

...

$30_2$
RELAY DEVICE

...

$40_1$
TERMINAL DEVICE

$40_2$
TERMINAL DEVICE

$40_3$
TERMINAL DEVICE

...

# FIG.3

# FIG.4

20

BASE STATION DEVICE

21

WIRELESS COMMUNICATION UNIT

211

RECEPTION PROCESSING UNIT

| 211a | 211b | 211c | 211d |
|---|---|---|---|
| WIRELESS RECEPTION UNIT | DEMULTI-PLEXING UNIT | DEMODULA-TION UNIT | DECODING UNIT |

212

TRANSMISSION PROCESSING UNIT

| 212d | 212c | 212b | 212a |
|---|---|---|---|
| WIRELESS TRANSMIS-SION UNIT | MULTI-PLEXING UNIT | MODULA-TION UNIT | ENCODING UNIT |

213

22

STORAGE UNIT

INFORMATION REGARDING TRANSMISSION FROM UNCONNECTED STATE

23

CONTROL UNIT

| ACQUISITION UNIT | 231 |
|---|---|
| PROCESSING UNIT | 232 |
| RECEPTION UNIT | 233 |
| SEPARATION UNIT | 234 |
| TRANSMISSION UNIT | 235 |

# FIG.5

# FIG.6

# FIG.7

RADIO FRAME
10msec

SUBFRAME
1msec

SLOT

SYMBOL

EP 4 195 822 A1

# FIG.8

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

# FIG.9

| $\mu$ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

# FIG.10

1 resource block

1 slot

DMRS
associated
with PDCCH

PDCCH

Time

Frequency

# FIG.11

| $\mu$ | Maximum number of monitored PDCCH candidates per slot and per serving cell $M_{PDCCH}^{max,\,slot,\,\mu}$ |
|---|---|
| 0 | 44 |
| 1 | 36 |
| 2 | 22 |
| 3 | 20 |

# FIG.12

| $\mu$ | Maximum number of non-overlapped CCEs per slot and per serving cell $C_{PDCCH}^{max,\,slot,\,\mu}$ |
|---|---|
| 0 | 56 |
| 1 | 56 |
| 2 | 48 |
| 3 | 32 |

# FIG.13

# FIG.14

# FIG.15

Processing time
for preparing
HARQ-ACK#3

| DCI | PDSCH #0 | PDSCH #1 | PDSCH #2 | PDSCH #3 | NN-K1 | HARQ-ACK{#0, #1, #2} |
|-----|----------|----------|----------|----------|-------|----------------------|

PDSCH-to-HARQ_feedback timing

# FIG.16

Processing time
for preparing
HARQ-ACK#3

| DCI | PDSCH #0 | PDSCH #1 | PDSCH #2 | PDSCH #3 | | HARQ-ACK{#0, #1, #2} | | HARQ-ACK{#3} |
|-----|----------|----------|----------|----------|--|----------------------|--|--------------|

PDSCH-to-HARQ_feedback timing

# FIG.17

| DCI#0 | DCI#1 | DCI#2 | DCI#3 | PDSCH#0 | PDSCH #1 | PDSCH #2 | PDSCH #3 |
|---|---|---|---|---|---|---|---|

# FIG.18

1 slot

| DCI#0 | DCI#1 | DCI#2 | DCI#3 |
|---|---|---|---|

CORESET

# FIG.19

# FIG.20

## INTERNATIONAL SEARCH REPORT

| International application No. |
|---|
| **PCT/JP2021/027656** |

**A. CLASSIFICATION OF SUBJECT MATTER**

*H04W 72/04*(2009.01)i; *H04W 72/12*(2009.01)i; *H04W 28/04*(2009.01)i
FI: H04W28/04 110; H04W72/04 136; H04W72/12

According to International Patent Classification (IPC) or to both national classification and IPC

**B. FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/190173 A1 (LG ELECTRONICS INC.) 03 October 2019 (2019-10-03) paragraphs [0005]-[0006], [0324]-[0337], [0460]-[0476], [0505], [0521]-[0524], fig. 25 | 1-4 |
| Y | | 6-20 |
| A | | 5 |
| Y | US 2020/0214084 A1 (INTEL CORP.) 02 July 2020 (2020-07-02) paragraph [0064] | 6-13 |
| Y | WO 2020/153210 A1 (NTT DOCOMO, INC.) 30 July 2020 (2020-07-30) paragraph [0069] | 6-13 |
| Y | Qualcomm Incorporated, TP for 38.213 Section 11.1 [online], 3GPP TSG RAN WG1 #92bis R1-1805569, [retrieved on 12 October 2021], Internet <URL: https://www.3gpp.org/ftp/ TSG_RAN/WG1_RL1/TSGR1_92b/Docs/R1-1805569.zip>, 18 April 2018, pp.1-9 section 11.1.1 | 12, 13 |
| Y | WO 2020/121413 A1 (NTT DOCOMO, INC.) 18 June 2020 (2020-06-18) paragraphs [0013], [0015], [0021]-[0023] | 14-20 |

[✓] Further documents are listed in the continuation of Box C.  [✓] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2021/027656** |

**C.    DOCUMENTS CONSIDERED TO BE RELEVANT**

| Category* | Citation of document, with indication, where appropriate, of the relevant passages | Relevant to claim No. |
|---|---|---|
| Y | US 2020/0196343 A1 (IDAC HOLDINGS, INC.) 18 June 2020 (2020-06-18) paragraph [0005] | 14-20 |

Form PCT/ISA/210 (second sheet) (January 2015)

**INTERNATIONAL SEARCH REPORT**

International application No.

**PCT/JP2021/027656**

**Box No. III    Observations where unity of invention is lacking (Continuation of item 3 of first sheet)**

This International Searching Authority found multiple inventions in this international application, as follows:

WO 2019/190173 A1 (LG ELECTRONICS INC.) 03 October 2019 (2019-10-03), paragraphs [5]-[6], [324]-[337], [460]-[476], [505], [521]-[524], fig. 25 & JP 2021-516522 A, paragraphs [0005]-[0006], [0272]-[0285], [0399]-[0415], [0442], [0455]-[0458], fig. 25 & US 2021/0007127 A1 & EP 3758268 A1

(Invention 1) Claims 1-13
    Claims 1-13 are classified as invention 1 as a result of having the special technical feature of "a communication method in which one piece of downlink control information for scheduling a plurality of PDSCH with different HARQ process identification information is transmitted to a terminal device, and a plurality of HARQ-ACK corresponding to the plurality of PDSCH scheduled by the downlink control information are received from the terminal device, the plurality of HARQ-ACK being fed back at the same feedback timing or a plurality of different feedback timings, wherein the feedback timing is selected in accordance with a prescribed condition."

(Invention 2) Claims 14-20
        Claims 14-20 share, with claim 1 classified as invention 1, the feature of "one piece of downlink control information for scheduling a plurality of PDSCH with different HARQ process identification information is transmitted to a terminal device," and "a plurality of HARQ-ACK corresponding to the plurality of PDSCH scheduled by the downlink control information are received from the terminal device." However, this feature does not make a contribution over the prior art in light of the content disclosed in document 1 (see paragraphs [0005], [0006], [0324]-[0337], [0460]-[0476], [0521]-[0524], etc., and see also the patent family (JP 2021-516522 A), paragraphs [0005], [0006], [0272]-[0285], [0399]-[0415], [0455]-[0458], etc.), and thus this feature cannot be said to be a special technical feature. Additionally, there is no other identical or corresponding special technical feature between these inventions.
    Furthermore, claims 14-20 do not depend from claim 1. Moreover, claims 14-20 are not substantially identical to or similarly closely related to any of the claims classified as invention 1.
    Accordingly, claims 14-20 cannot be classified as invention 1.
    Claims 14-20 are classified as invention 2 as a result of having the special technical feature of "a communication method in which a plurality of downlink control information for scheduling a plurality of PDSCH with different HARQ process identification information is transmitted to a terminal device, the plurality of downlink control information being disposed in a single CORESET in one slot, and a plurality of HARQ-ACK corresponding to the plurality of PDSCH scheduled by the plurality of downlink control information are received from the terminal device."

Form PCT/ISA/210 (continuation of first sheet) (January 2015)

## INTERNATIONAL SEARCH REPORT

International application No.

**PCT/JP2021/027656**

| Box No. III | Observations where unity of invention is lacking (Continuation of item 3 of first sheet) |
|---|---|

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/JP2021/027656**

| Patent document cited in search report | | | Publication date (day/month/year) | Patent family member(s) | Publication date (day/month/year) |
|---|---|---|---|---|---|
| WO | 2019/190173 | A1 | 03 October 2019 | JP 2021-516522 A paragraphs [0005]-[0006], [0272]-[0285], [0399]-[0415], [0442], [0455]-[0458], fig. 25 US 2021/0007127 A1 EP 3758268 A1 | |
| US | 2020/0214084 | A1 | 02 July 2020 | (Family: none) | |
| WO | 2020/153210 | A1 | 30 July 2020 | (Family: none) | |
| WO | 2020/121413 | A1 | 18 June 2020 | (Family: none) | |
| US | 2020/0196343 | A1 | 18 June 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOKIA ; NOKIA SHANGHAI BELL.** Required changes to NR using existing DL/UL NR waveform. *3GPP RAN1#101,* May 2020